# EUROPEAN PATENT APPLICATION

(11) **EP 2 728 399 A1**
(43) Date of publication of application: **07.05.2014**
(21) Application number: 12804155.5
(22) Date of filing: 29.06.2012
(51) Int. Cl.: G02C 5/16

(54) **TEMPLE FOR EYEGLASS FRAME, AND METHOD FOR PRODUCING TEMPLE**

(30) Priority: 30.06.2011 JP 2011145499; 08.03.2012 JP 2012051666
(71) Applicant: Planet Vision60 Co., Ltd., Higashiosaka-shi, Osaka 577-0055 (JP)
(72) Inventor: YOSHIDA, Takehiko, Higashiosaka-shi Osaka 677-0055 (JP)
(74) Representative: Zimmermann, Tankred Klaus
(86) International application number: PCT/JP2012/066720
(87) International publication number: WO 2013/002379

(57) **Abstract**

[Problem] A temple for a glasses frame that can be switchable between the state where wearing of a glasses frame is easy and the state where a holding property of the glasses frame is excellent, the switching being capable of being confirmed by sound, is provided.

[Solving Means] A glasses frame 1 includes a front frame portion 2 and a temple 3 including a temple member 3a. A deformable region portion 31 deforming in inner and outer directions is provided at a portion of the temple member 3a in a longitudinal direction thereof. A bending member 32 is provided in the deformable region portion 31, and the bending member 32 is composed of a coupling portion 4 coupling two end portions 33 and an elastic portion 35 coupling the two end portions 33 in a state where the coupling portion 34 has been curved. The bending member 32 can be switched between curved states inversed to each other while generating sound, so that switching can be performed between a closed state of a distal end of the temple 3 and an opened state of the distal end thereof.

## Description

### Technical Field

The present invention relates to a temple for a glasses frame and a manufacturing method thereof, and in particular to a temple for a glasses frame which makes wearing of a glasses frame easy and is excellent in holding property, and a manufacturing method thereof.

### Background Art

A glasses frame is generally constituted by connecting frame members, such as a front frame portion, temples extending from both ends of the front frame portion backward, respectively, hinges, and the like. In such a glasses frame, from a viewpoint of designability, glasses frames provided with so-called straight temples (temples whose back end portions are not curved downward or temples whose back end portions are reduced in curvature) are in currency.

In a glasses frame provided with such straight temples, in general, temple back end portion sides are curved outward in a convex shape so as to extend along user's sides (in other words, so as to extend from user's ear backs toward the back of the user's head) and spring properties in pivoting directions are imparted to the whole temples in order to impart spring forces (pressing forces) to both sides of the user's face.

However, when the temple back end portion sides are curved outward in a convex manner so as to extend along the sides of the user's face, a distance between the back end portions of left and right temples becomes shorter than a width of the face, so that the temples must be put in a largely opened state approximately equal to the width of the face or larger than the width of the face against spring forces imparted to the both sides of the face prior to wearing the glasses frame, which results in such a problem that it is difficult to wear the glasses frame. Further, since the straight temple is reduced in a portion abutting on the user's ear back, the straight temple is inferior to an ordinary temple whose back end portion curves downward in holding property serving to hold a glasses frame in a stable state when a user wears the glasses frame.

Therefore, there are conventionally various proposals for increasing a wearing property or the holding property of the glasses frame provided with the straight temples.

For example, as the temple of the glasses frame, one composed of a first temple coupled to a front frame portion via a coupling and a second temple swingably attached to a back end portion of the first temple via a rod, a position of the second temple to be pivoted being set to a predetermined distance from an inner portion of the second temple has been proposed (see Patent Document 1).

However, in the temple of such a conventional glasses frame, since the second temple is swingably attached to the back end portion of the first temple via the rod, the wearing property is improved, but a portion from the inner end portion of the second temple to a pivoting portion (a range of L in Figure 1 and Figure 4 in Patent Document 1) touches a side portion of a face due to motion of the face of a user, exercise performed by the user, or the like, so that the second temple slightly swings even during wearing of the glasses frame, which results in such a problem that the holding property cannot be maintained excellent. Further, since such a configuration is adopted that the first temple and the second temple are pivoted to each other, such a problem that a rod member deteriorates easily according to repetitive use of the glasses frame.

### Citation List

### Patent Document

Patent Document 1: Japanese Utility Model Registration No. 3081261

### Summary of Invention

### Technical Problem

The present invention has solved the problem of such a conventional art, and an object thereof is to provide a temple for a glasses frame where switching can be performed between a state that a glasses frame can be worn easily and a state that the glasses frame is excellent in holding property and where the switching can be confirmed by sound.

Further, another object of the present invention is to provide a temple for a glasses frame which can obtain an advantageous effect such as described above and can adopt various designs therefor.

### Solution to Problems

The present invention is directed to a temple for a glasses frame, including a temple member pivotally formed to extend on each side of a front frame portion holding lenses and formed so as to be openable and closable between a position where the temple member extends in a direction intersecting the front frame portion and a position where the temple member extends along the front frame portion, wherein the temple member is provided with a deformable region portion deforming in inner and outer directions at a portion of the temple member in a longitudinal direction thereof; a bending member formed to be switchable between curved states inversed to each other is provided in the deformable region portion; the bending member is composed of two end portions formed at positions opposed to each other, a pair of coupling portions formed of material having flexibility and arranged side by side in a vertical direction so as to couple the two end portions, and an elastic portion coupling the two end portions at a position sandwiched between the pair of coupling portions in curved states of the coupling portions; the coupling portions are switched between a first attitude curved outward in a convex state and a second attitude curved inward in a convex state; the lengths of the coupling portions are longer than a length of the elastic portion in a front-back direction thereof when the coupling portions are in the first attitude or in the second attitude; and the elastic portion stretches elastically in the course from one attitude of the first attitude and the second attitude to the other attitude thereof.

In the present invention, the term "inner and outer directions" means inner and outer directions in a state attached with the front frame portion constituting the glasses frame, the term "inward," means inward in the state attached with the front frame portion constituting the glasses frame, and the term "outward," means outward in the state attached with the front frame portion constituting the glasses frame. Further, the term "vertical direction" means a vertical direction in a state where a user has worn the glasses frame. Moreover, a direction of a front of head of a user based upon a center of a horizontal section of a head of the user which has worn the glasses frame is a forward direction, a direction of a back of head of the user is a backward direction, the term "front end portion" means a front end portion of each member constituting the glasses frame in the glasses frame which has been worn by a user, and the term "back end portion" means a back end portion of each member constituting the glasses frame in the glasses frame which has been worn by a user. Furthermore, "length of a coupling portion" means a length extending along a curvature from the front end portion of a curving coupling portion to the back end thereof, and the term "length of an elastic portion in the front-back directions" means a length of a straight line connecting the front end portion and the back end portion of the elastic portion.

In the temple according to the present invention, since the coupling portion has the flexibility, the coupling portion can be switched between the first attitude and the second attitude.

Since the length of the coupling portion is longer than a length of the elastic portion in the front-back direction, and the coupling portion is curved in the convex shape so that the coupling portion and the elastic portion are connected to end portions facing each other at the front end portion and the back end portion of the coupling portion and the elastic portion, when a force is imparted to the coupling portion from a direction in which the coupling portion curves in a convex shape toward the elastic portion such that the attitude of the coupling portion is switched from one of the first attitude and the second attitude to the other, the coupling portion acts to stretch straightly, thereby generating a force stretching the elastic portion. When the length of stretching of the elastic portion is long, the attitude of the coupling portion becomes easy to switch. However, when the force acting on the coupling portion is small, the length of stretching of the elastic portion is short, so that the attitude of the coupling portion is not switched and the original attitude thereof is maintained.

When the force acting on the coupling portion is large, the length of stretching of the elastic portion become long, so that the coupling portion is switched from one attitude to the other attitude. After switching between the attitudes of the coupling portion, the switched attitude of the coupling portion is maintained. The coupling portion can be switched between the first attitude and the second attitude in this manner.

In the glasses frame provided with temples according to the present invention, when the coupling portions are switched to take the second attitude at a wearing time of a user, the coupling portions are curved inward in a convex shape such that the back end portions of the temples are directed outward, the distance between the back end portions of the left and right temples becomes relatively wide, which results in ease of wearing of the glasses frame.

Further, by performing switching such that the coupling portions take the first attitude after the glasses frame is worn by the user, the coupling portions are curved outward in the convex such that the back end portions of the temples are directed inward, so that the temples are maintained in such a state that they are fitted to face sides of the user.

Thereby, the holding property of the glasses frame can be enhanced as compared with that of a conventional one. Further, since the coupling portions are switched to take the second attitude at a removing time of the glasses frame, the back end portions of the temples are directed outward, the distance between the back end portions of the left and right temples becomes relatively large, so that the glasses frame can be removed easily.

In such a temple, such a configuration is preferably adopted that when the coupling portion are switched from one attitude of the first attitude or the second attitude to the other attitude, the coupling portions oscillate to generate sound.

When the coupling portions are switched between the first attitude and the second attitude, oscillation occurs in the bending member to generate sound, so that the user can confirm, through the sound, whether or not switching of the attitude of the temples has been performed.

Here, the bending member may be formed integrally with the temple member.

Preferably, the temple member is composed of a front portion attachable to the front frame portion of the glasses frame and a rear portion positioned backward of the front portion and detachably attached to the front portion; and the rear portion is provided with the deformable region portion.

According to such a preferable temple, since the rear portion provided with the deformable region portion is detachable from the front portion, the rear portion can be replaced with another rear portion. For example, if a plurality of rear portions different in degree of curvature of the coupling portion in the first attitude and the second attitude are prepared, the degree of the curvature of the coupling portion in the first attitude and the second attitude can be changed only by replacement of the rear portion, so that the holding property of the glasses frame can be adjusted easily. Further, even if a defect occurs in the deformable region portion, the rear portion can be replaced with another one without replacing the entire temple, which results in cost reduction. Furthermore, by preparing a rear portion which is not provided with the deformable region portion and performing replacement of the rear portion with such a rear portion, the temple can be used as a conventional one.

Further, the present invention includes a temple comprising a temple member provided with a temple main body configured to be attachable to a front frame portion of a glasses frame and an auxiliary temple having a front end portion attached to the temple main body and facing the temple main body on an internal face of the temple main body up to a back end portion of the temple main body, wherein the auxiliary temple is provided with a deformable region portion deforming in inner and outer directions at a portion of the auxiliary temple in a longitudinal direction thereof; the deformable region portion is provided with a bending member formed to be switchable between curved states reversed to each other; the bending member is composed of two end portions at positions opposed to each other, a pair of coupling portions formed of a material having flexibility and arranged side by side in a vertical direction so as to couple the two end portions, and an elastic portion coupling the two end portions at a position sandwiched by the pair of coupling portions in the curved states of the coupling portions; the coupling portions are switched between a first attitude curved outward in a convex shape and a second attitude curved inward in a convex shape; when the coupling portions are in the first attitude or in the second attitude, the lengths of the coupling portions are longer than the length of the elastic portion in a front-back direction thereof; and the elastic portion stretches elastically in the course from one attitude of the first attitude and the second attitude to the other attitude thereof.

Even in this temple, an advantageous effect similar to that of the temple according to the invention described in claim 1 can be obtained.

Further, since the auxiliary temple is arranged so as to face the temple main body, when the coupling portions are changed from the second attitude to the first attitude, a back end portion of the auxiliary temple is caused to abut on the temple main body and a force can be imparted to the deformable region portion utilizing the abutting portion as a fulcrum, the attitude of the coupling portions can be switched easily.

Further, the present invention is a temple for a glasses frame including a temple member pivotally formed so as to extend on each side of a front frame portion holding lenses and formed so as to be openable and closable between a position where the temple member extends in a direction intersecting the front frame portion and a position where the temple member extends along the front frame portion, wherein the temple member has flexibility and has a curved portion curving in inner and outer directions in a portion in a longitudinal direction thereof; the thickness of the curved portion is thinner than the thickness of portions adjacent before and after the curved portion; and the curved portion is switched between a first attitude curved outward in a convex shape and a second attitude curved inward in a convex shape.

Since the curved portion is switched between the first attitude and the second attitude, an advantageous effect similar to that of the temple of the invention described in claim 1 can be obtained. Further, since the configuration of the curving member is simple, cost reduction can be achieved.

In such a temple, such a configuration can be adopted that the bending member is formed as a member separate from the temple member; a cavity portion is formed inside the temple member in the deformable region portion; and the bending member is fitted into the cavity portion so that the bending member is fixed to the temple member so as to curve toward both sides in the opening and closing directions of the temple member opening and closing relative to the front frame portion.

Even if such a configuration is adopted that the bending member and the temple member are formed as members separate from each other and the bending member is fitted into the cavity portion formed in the temple member, an advantageous effect similar to that of the temple of the invention described in claim 1 can be obtained. In particular, since the bending member is fitted into the cavity portion formed in the temple member, oscillation occurring in the bending member at a switching time between the attitudes is not restricted, so that sound can be guided outside the temple member.

Here, since the bonding member is fitted into the cavity portion formed in the deformable region portion of the temple member, the bending member cannot be seen from the outside. Therefore, by modifying the shape or the pattern of the temple member, various designs can be adopted.

In such a temple, such a configuration can be adopted that through-holes are formed in the bending member on both sides of the curvatures of the coupling portions, and two convex portions are formed so as to project from the temple member within the cavity portion, and the convex portions are fitted into the through-holes of the bending member, so that the bending member is fixed to the temple member.

In order to fix the bending member within the cavity portion of the temple, the convex portions formed on the temple member and the through-holes formed in the bending member can be used within the cavity portion.

Further, the cavity portion can be formed, in the deformable region portion, of a recessed portion formed inside or outside the temple member in the opening and closing directions thereof and a cover member fitted into the recessed portion so as to cover the recessed portion.

The cavity portion fitted with the bending member can be constituted by the recessed portion formed in the temple member and the cover member fitted into the recessed portion. In this case, since the bending member which has been assembled into the recessed portion cannot be seen from the outside, temples having various designs can be obtained by applying various ideas to the shapes or the patterns of the temple member and the cover member.

Furthermore, the cavity portion may be formed, in the deformable region portion, of a through-hole formed in the temple member in a direction intersecting a pivoting face of the temple member and two cover members closing opening portions on both side of the through-hole.

When the cavity portion is formed of the through-hole formed in the temple member and the cover members, the bending member can be fitted into the cavity portion by attaching the bending member to the temple member within the through-hole and closing the opening portions on both sides of the through-hole by the cover members.

Further, the present invention is a temple for a glasses frame, comprising: a temple member pivotally formed so as to extend to each side of a front frame portion holding lenses and formed to be openable and closable between a position where the temple member extends in a direction intersecting the front frame portion and a position where the temple member extends along the front frame portion; a deformable region portion formed at a distal end side of the temple member and deformable in inner and outer directions; a bending member fixed to a bendable tongue-shaped portion formed in the temple member in the deformable region portion; and a bendable cap member enclosing the tongue-shaped portion in the deformable region portion to form a cavity portion around the bending member, wherein the bending member is composed of two end portions formed at positions opposed to each other, a pair of coupling portions formed of a material having flexibility and arranged side by side in a vertical direction so as to couple the two end portions, and an elastic portion coupling the two end portions in at a position sandwiched by the pair of coupling portions in curved states of the coupling portions; the coupling portions are switched between a first attitude curved outward in a convex shape and a second attitude curved inward in a convex shape; when the coupling portions are in the first attitude or the second attitude, the lengths of the coupling portions are longer than the length of the elastic portion in a front-back direction of the elastic portion; and the elastic portion stretches elastically in the course of switching between one attitude of the first attitude and the second attitude of the bending member to the other attitude.

In the deformable region portion, the bendable tongue-shaped portion is formed on the temple member, so that by fixing the bending member switchable between two curved states to the tongue-shaped portion, the distal end side of the temple can be disposed in the deformable region portion while it is switched between two positions.

Here, such a configuration can be adopted that through-holes are formed in the bending member on both sides of curvature of the coupling portions, two convex portions are formed in the deformable region portion so as to project from the tongue-shaped portion, and the convex portions are fitted into the through-holes of the bending member, so that the bending member is fixed to the temple member.

In order to fix the bending member to the temple member, the convex portions formed on the tongue-shaped portion and the through-holes formed in the bending member can be used.

Furthermore, the present invention is a temple for a glasses frame, including a temple member pivotally formed to extend on each side of a front frame portion holding lenses and formed so as to be openable and closable between a position where the temple member extends in a direction intersecting the front frame portion and a position where the temple member extends along the front frame portion, wherein the temple member is provided with a deformable region portion deforming in inner and outer directions at a portion of the temple member in a longitudinal direction thereof; a bending member formed in the deformable region portion to be switchable between curved states inversed to each other; the bending member is formed of a plate-shaped body formed of an elastic material to be curved; and a bulging portion bulging so as to project toward one face side of the plate-shaped body is formed at a portion of an intermediate portion of the plate-shaped body; and the bending member is switched between a first attitude curved outward in a convex shape and a second attitude curved inward in a convex shape.

When the curving plate-shaped body becomes a non-curved state, the bulging portion formed in the intermediate portion deforms, so that the bulging portion exerts a force for returning to the original shape of the bulging portion. Therefore, a force acts in a direction in which the plate-shaped body curves, so that one of the curved states inversed to each other occurs. Accordingly, the distal end side of the temple can be switched between the two positions to be disposed even by using such a bending member.

The present invention is a manufacturing method of a temple including a temple member pivotally formed so as to extend at each of both sides of a front frame portion holding lenses and provided with a deformable region portion deforming in inner and outer directions at a portion of the temple member in a longitudinal direction thereof, comprising: a step of preparing the temple member having a recessed portion formed in the deformable region portion from one side in a pivoting direction of the temple member; a step of preparing a bending member composed of two end portions formed at positions opposed to each other, a pair of coupling portions formed of a material having flexibility and arranged side by side in a vertical direction so as to couple the two end portions, and an elastic portion coupling the two end portions at a position sandwiched between the pair of coupling portions in curved states of the coupling portions, the bending member being formed so as to be switchable between curved states inversed to each other; a step of fitting the bending member into the recessed portion of the temple member in such a direction that a curved direction of the coupling portions coincides with an opening portion of the recessed portion to fix the bending member to the temple member within the recessed portion; and a step of attaching a cover member to the temple member so as to cover the recessed portion of the temple member.

By forming the recessed portion in the temple member from one side in the pivoting direction of the temple, the bending member can be fitted into the recessed portion. Here, by causing the curving direction of the coupling portion to coincide with the opening portion of the recessed portion, the position of the distal end side of the temple member can be displaced toward the inside and the outside in the pivoting direction of the temple. By fixing the bending member to the temple member within the recessed portion and attaching the cover member to the temple member so as to cover the recessed portion, a temple which cannot be seen from the outside can be obtained.

In such a manufacturing method of a temple, the convex portions are formed on the temple member within the recessed portion, the through-holes are formed in the bending member on both sides of the curvature of the coupling portions, and the bending member can be fixed to the temple member by fitting the convex portions on the temple member into the through-holes of the bending member.

In order to fix the bending member to the temple member within the recessed portion, the convex portions are formed inside the recessed portion, so that the convex portions of the temple member can be fitted to the through-holes of the bending member.

Further, in order to manufacture a temple, for example, a manufacturing method of a temple including a temple member pivotally formed so as to extend at each of both sides of a front frame portion holding lenses and provided with a deformable region portion deforming in inner and outer directions at a portion of the temple member in a longitudinal direction thereof, comprising: a step of preparing the temple member formed with a through-hole extending through the temple member in the deformable region portion in a direction intersecting a pivoting face of the temple member; a step of preparing a bending member composed of two end portions formed at positions facing each other, a pair of coupling portions formed of material having flexibility and arranged side by side in a vertical direction so as to couple the two end portions, and an elastic portion coupling the two end portions at a position sandwiched between the pair of coupling portions in curved states of the coupling portions and formed so as to be switchable between curved states inversed to each other; a step of, in a state where the through-hole of the temple member has been formed to extend in a longitudinal direction of the temple member, fitting the bending member into the through-hole of the temple member within the through-hole in such a direction that the curving direction of the coupling portions intersects the extending-through direction of the through-hole to fix the bending member to the temple member within the through-hole; and a step of closing opening portions on both sides of the through-hole can be used.

By forming the through-hole extending through the temple member in the direction intersecting the pivoting face of the temple and fitting the bending member into the through-hole in such a direction that the curving direction of the coupling portion intersects the extending-through direction of the through-hole, a temple whose distal end is switched between two positions to be disposed can be obtained.

In such a manufacturing method of a temple, the convex portions projecting in a widthwise direction of the through-hole inside the through-hole are formed on the temple member, through-holes are formed in the bending member on both sides of the curvature of the coupling portions, and when the bending member is fitted into the through-hole of the temple, member, the convex portions of the temple member is fitted into the through-holes of the bending member so that the bending member can be fixed to the temple member.

In order to fix the bending member to the temple member within the through-hole, the convex portions are formed within the through-hole and the convex portions of the temple member can be fitted into the through-holes of the bending member.

Further, a manufacturing method of a temple including a temple member pivotally formed so as to extend at each of both sides of a front frame portion holding lenses and provided with a deformable region portion deforming in inner and outer directions on a distal end side of the temple member in a longitudinal direction thereof, comprising: a step of preparing the temple member having bendable tongue-shaped portions on both sides in the pivoting direction of the temple member in the deformable region portion; a step of preparing a bending member composed of two end portions formed at positions facing each other, a pair of coupling portions formed of a material having flexibility and arranged side by side in a vertical direction so as to couple the two end portions, and an elastic portion coupling the two end portions at a position sandwiched between the pair of coupling portions in curved states of the coupling portions and formed so as to be switchable between curved states inversed to each other; a step of fixing the bending member to the tongue-shaped portions of the temple member such that the curving direction of the coupling portion is positioned on both sides in a pivoting direction of the temple member; and a step of covering a distal end side of the temple member with a bendable cap member so as to cover the tongue-shaped portions and the bonding member.

By forming the bendable tongue-shaped portions on the temple member in the deformable region portion and fixing the bending member to the tongue-shaped portions of the temple member such that the curving direction of the coupling portion is positioned on both sides in the pivoting direction of the temple member, a temple whose distal end is switched between two positions to be disposed can be obtained.

In such a manufacturing method of a temple, convex portions projecting in the bending direction of the tongue-shaped portions are formed in the tongue-shaped portions, through-holes are formed in the bending member on both sides of the curvature of the coupling portions, and the convex portions of the temple member are fitted into the through-holes of the bending member, so that the bending member can be fixed to the temple member.

In order to fix the bending member to the temple member, the convex portions are formed on the bendable tongue-shaped portions and the convex portions of the tongue-shaped portions can be fitted into the through-holes of the bending member.

### Advantageous Effects of Invention

According to the present invention, a temple for a glasses frame where switching can be performed between an easy state of wearing a glasses frame and an excellent state of a holding property of the glasses frame and the switching can be confirmed by sound can be obtained.

Further, by constituting the bending member as a member separated from the temple member and fitting the bending member into the temple member, a temple for a glasses frame where various designs can be adopted and a manufacturing method of the same can be obtained in addition to an advantageous effect such as described above.

The above-described object, another object, a feature, and a merit of the present invention will become further obvious from explanation about the following embodiment for carrying out the invention conducted with reference to the drawings.

### Brief Description of Drawings

[Fig. 1] Figures 1(a) to 1(c) configuration views of a temple according to a first embodiment, Figure 1(a) is a plan view of a glasses frame provided with the temple according to the first embodiment when a coupling portion is in a first attitude, Figure 1(b) is a side view of the glasses frame, Figures 1(c) is a plan view of the glasses frame when the coupling portion is in a second attitude;
[Fig. 2] Figures 2(a) to 2(c) are configuration views of a bending member provided in the temple according to the first embodiment, Figure 2(a) is a side view of a bending member of a left-side temple viewed from the outside when the coupling portion is in the first attitude, Figure 2(b) is a plan view of the bending member when the coupling portion is in the first attitude, and Figure 2(c) is a plan view of the bending member when the coupling portion is in the second attitude;
[Fig. 3] Figures 3(a) to 3(c) are views for explaining a switching action between attitudes of the bending member according to the first embodiment, Figure 3(a) is a plan view of the bending member when the coupling portion is in the first attitude, Figure 3(b) is a plan view of the bending member in the switching course of the coupling portion from one of the first attitude and the second attitude to the other, and Figure 3(c) is a plan view of the bending member when the coupling portion is in the second attitude;
[Fig. 4] Figures 4(a) and 4(b) are side views of a glasses frame provided with a temple according to a second embodiment, Figure 4(a) is a side view of the glasses frame in a state where a rear portion constituting the temple has been attached to a front portion constituting the temple, and Figure 4(b) is a side view of the glasses frame in a state where the rear portion has been detached from the front portion;
[Fig. 5] Figures 5(a) to 5(c) are views for explaining a switching action between attitudes of a bending member according to a third embodiment, Figure 5(a) is a plan view of a glasses frame provided with a temple according to the third embodiment when a coupling portion is in the first attitude, Figure 5(b) is a plan view of the glasses frame when the coupling portion is in the second attitude, and Figure 5(c) is a plan view of the temple according to the first embodiment;
[Fig. 6] Figures 6(a) to 6(c) are views showing a configuration of a temple according to a fourth embodiment, Figure 6(a) is a plan view of a glasses frame provided with the temple when a coupling portion is in the first attitude, Figure 6(b) is a plan view of the glasses frame when the coupling portion is in the second attitude, and Figure 6(c) is a perspective view of the coupling portion when the coupling portion of a left-side temple of the glasses frame is in the first attitude;
[Fig. 7] Figure 7 is an illustrative view showing another example of a pair of glasses using the temples of the present invention;
[Fig.8] Figure 8 is a perspective view of the pair of glasses shown in Figure 7;
[Fig. 9] Figure 9 is an illustrative view showing a hinge portion of the pair of glasses shown in Figure 7;
[Fig. 10] Figure 10 is an illustrative view showing a temple of the present invention used in the pair of glasses shown in Figure 7;
[Fig. 11] Figure 11 is a plan view showing a bending member used in the temple of the present invention;
[Fig. 12] Figure 12 is a perspective view showing a state where the bending member shown in Figure 11 has been curved in one direction;
[Fig. 13] Figure 13 is a top view of the bending member shown in Figure 12;
[Fig. 14] Figure 14 is a perspective view of a halfway stage in the switching course from a state where the bending member shown in Figure 11 has been curved in one direction to a state where the bending member has curved in the other direction;
[Fig. 15] Figure 15 is a top view of the bending member shown in Figure 14;
[Fig. 16] Figure 16 is a perspective view showing a state where the bending member shown in Figure 11 has been curved in the other direction;
[Fig. 17] Figure 17 is a top view of the bending member shown in Figure 16;
[Fig. 18] Figure 18 is sectional illustrative view showing a deformable region portion of the temple shown in Figure 10;
[Fig. 19] Figure 19 is an illustrative view showing a state where a distal end side of the temple of the pair of glasses shown in Figure 7 has been displaced;
[Fig. 20] Figure 20 is a sectional view showing a state of the temple incorporated with the bending member when the bending member is in the first attitude;
[Fig. 21] Figure 21 is a sectional view showing the state of the temple incorporated with the bending member in a halfway stage of switching of the bending member from the first attitude to the second attitude;
[Fig. 22] Figure 22 is a sectional view showing a state of the temple incorporated with the bending member when the bending member is in the second attitude;
[Fig. 23] Figure 23 is an illustrative view showing another example of the temple of the present invention;
[Fig. 24] Figure 24 is a top view showing a first member and a second member for obtaining the temple shown in Figure 23;
[Fig. 25] Figure 25 is a perspective view showing the first member and the second member shown in Figure 24;
[Fig. 26] Figure 26 is an illustrative view showing a state where a bending member is inserted into a through-hole of a temple member for obtaining the temple shown in Figure 23;
[Fig. 27] Figure 27 is an exploded perspective view showing still another example of the temple of the present invention;
[Fig. 28] Figure 28 is an illustrative view showing a state where a bending member is attached to tongue-shaped portions of the temple shown in Figure 27;
[Fig. 29] Figure 29 is a perspective view showing another example of the bending member used in the temple of the present invention;
[Fig. 30] Figure 30 is a top view showing a state where the bending member shown in Figure 29 has been curved in one direction;
[Fig. 31] Figure 31 is a top view showing a state where the bending member shown in Figure 29 has been curved in the other direction;

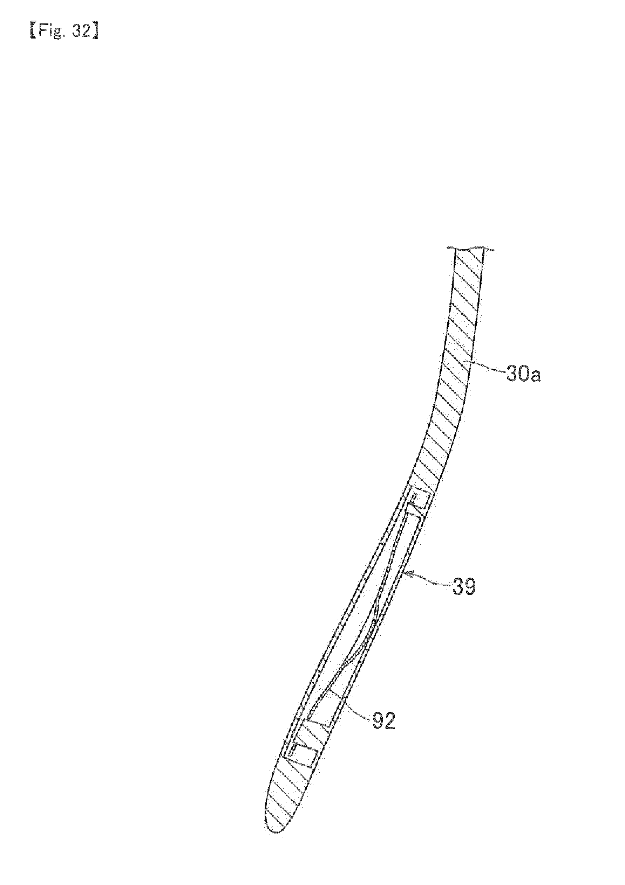

[Fig. 32] Figure 32 is a sectional view showing the temple incorporated with the bending member shown in Figure 29 when the bending member is in the first attitude; and

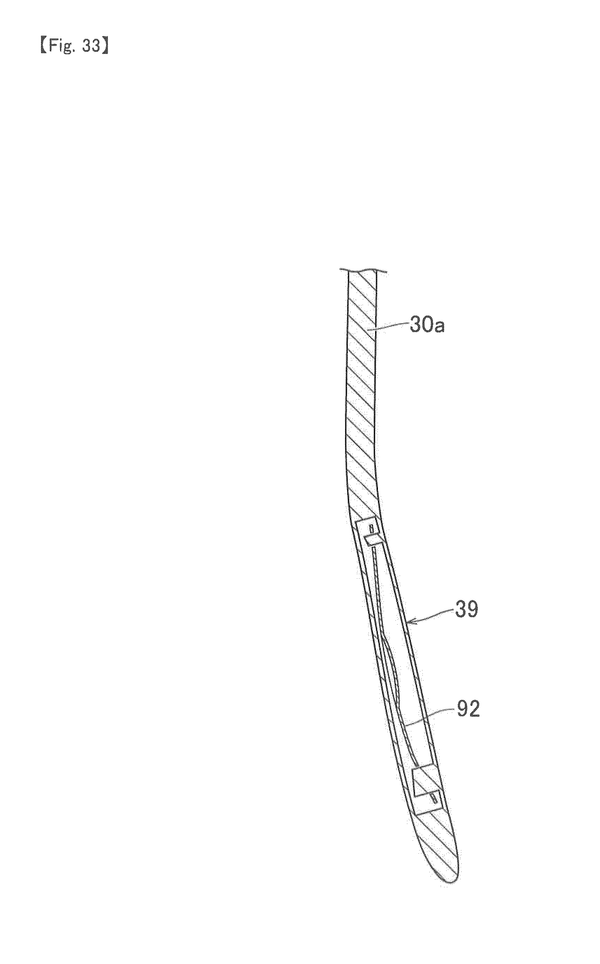

[Fig. 33] Figure 33 is a sectional view showing the temple incorporated with the bending member shown in Figure 29 when the bending member is in the second attitude.

### Description of Embodiments

A temple according to a first embodiment of the present invention will be described referring to the accompanying drawings properly.

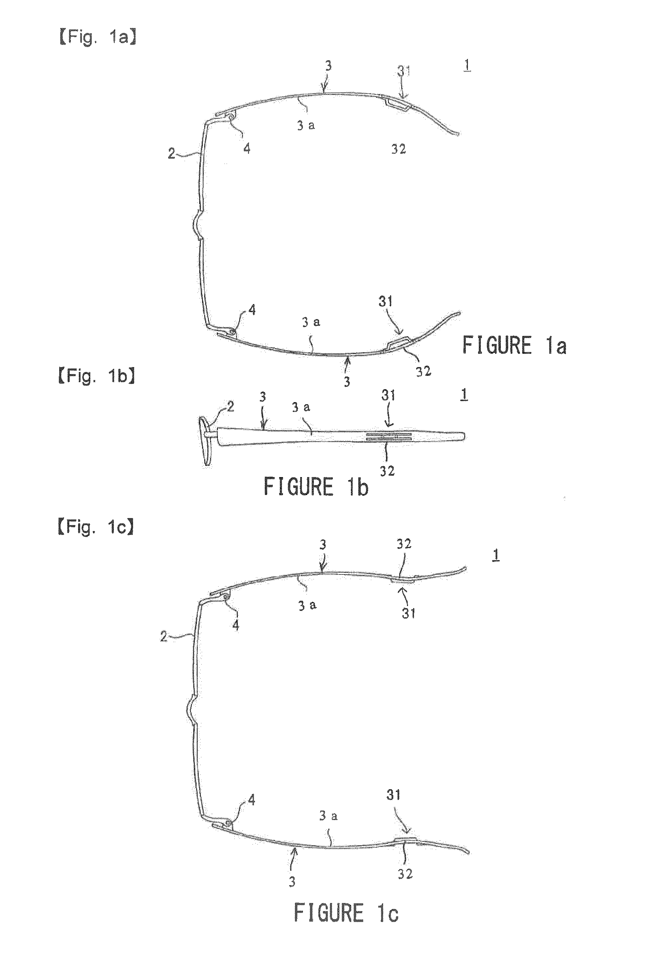

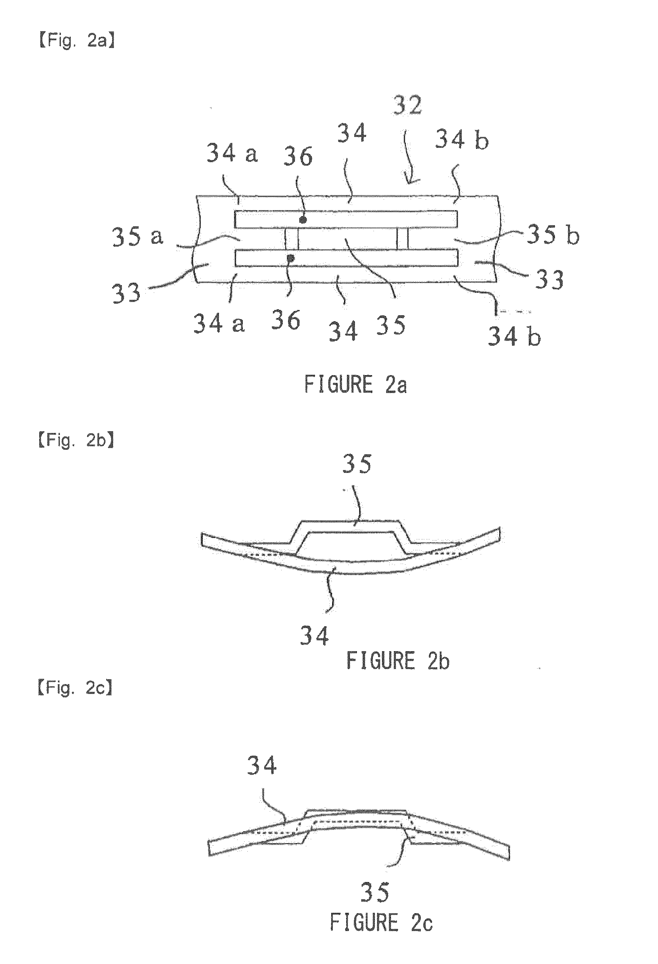

Figures 1(a) to 1(c) are configuration views of a temple according to this embodiment, Figure 1(a) is a plan view of a glasses frame provided with the temple according to the first embodiment when a coupling portion is in a first attitude, Figure 1(b) is a side view of the glasses frame, and Figure 1(c) is a plan view of the glasses frame when the coupling portion is in a second attitude. Figures 2(a) to 2(c) are configuration views of a bending member provided in the temple according to the first embodiment, Figure 2(a) is a side view of a bending member of a left-side temple viewed from the outside when the coupling portion is in the first attitude, Figure 2(b) is a plan view of the bending member when the coupling portion is in the first attitude, and Figure 2(c) is a plan view of the bending member when the coupling portion is in the second attitude.

A glasses frame 1 is provided with a front frame portion 2 holding lenses, left and right temples 3 extending from both ends of the front frame portion 2 rearward, respectively, and hinges 4 causing the left and right temples 3 to open and close at both end portions of the front frame portion 2.

The temple 3 includes a temple member 3a formed to be openable and closable between a position at which the temple member 3a extends so as to intersect the front frame portion 2 and a position at which the temple member 3a extends along the front frame portion 2. The temple member 3a is provided with a deformable region portion 31 which deforms in inner and outer directions at a portion of the temple member 3a in a longitudinal direction thereof.

A bending member 32 switchable between bent states inverted to each other, which constitute convex shapes on both sides in the inner and outer direction is provided in the deformable region portion 31. The bending member 32 is provided with two end portions 33 opposed to each other in a longitudinal direction of the bending member 32, a pair of coupling portions 34 arranged side by side in a vertical direction so as to couple the two end portions 33, and an elastic portion 35 sandwiched between the pair of coupling portions 34.

As a material of the bending member 32, for example, such a metal as magnesium, aluminum, titanium or stainless steel, or resin can be used.

The coupling portion 34 has flexibility to curve in the inner and outer directions.

The elastic portion 35 has elasticity to stretch in a front-back direction elastically. The elastic portion 35 has a convex shape projecting in an inner direction and it stretches in the front-back direction elastically by stretching of projection of the convex-shaped projecting portion. Incidentally, the elastic portion 35 is not limited to such a structure but it can have any structure stretchable in the front-back direction elastically.

A slit is provided between the coupling portion 34 and the elastic portion 35, and the coupling portion 34 and the elastic portion 35 are separated from each other in a vertical direction.

A front end portion 34a of the coupling portion 34 and a front end portion 35a of the elastic portion 35 are connected to one of the end portions 33, while a back end portion 34b of the coupling portion 34 and a back end portion 35b of the elastic portion 35 are connected to the other of the end portions 33. Further, the length of the coupling portion 34 is longer than the length of the elastic portion 35 in the front-back direction.

Since the length of the coupling portion 34 is longer than the length of the elastic portion 35 in the front-back direction and the coupling portion 34 and the elastic portion 35 are connected to the two end portions 33 opposed to each other at their front end portions and their back end portions, the coupling portion 34 is switchable between a first attitude where the coupling portion 34 has been curved outward in a convex shape and a second attitude where the coupling portion 34 has been curved inward in a convex shape. Incidentally, the attitude of the bending member 32, namely, the attitude of the deformable region portion 31, when the coupling portion 34 takes the first attitude is called "first attitude", while the attitude of the bending member 32, namely, the attitude of the deformable region portion 31, when the coupling portion 34 takes the second attitude is called "second attitude".

Next, an action occurring when the attitude of the coupling portion 34 is switched from one to the other will be described.

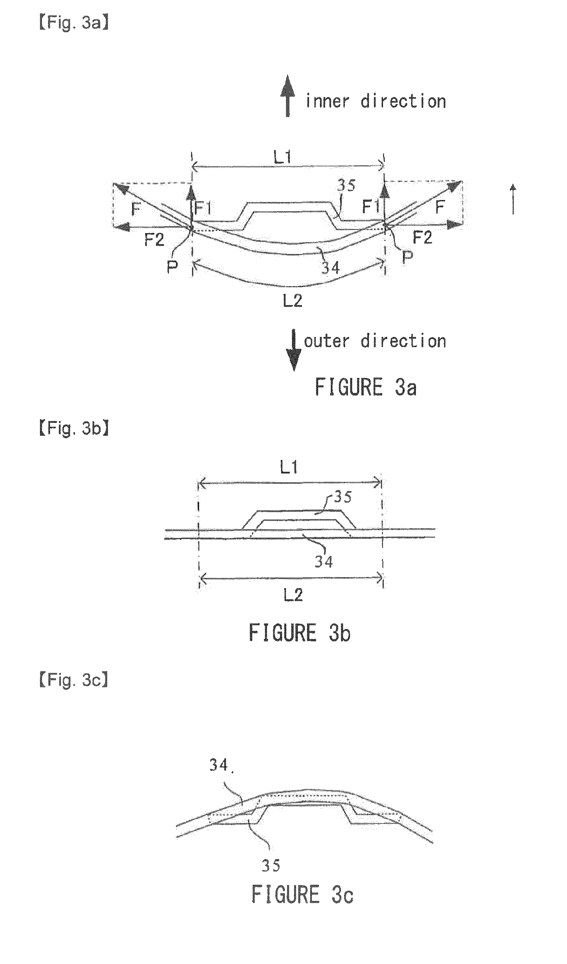

Figure 3(a) is a plan view of the bending member 32 when the coupling portion 34 is in the first attitude, Figure 3(b) is a plan view of the bending member 32 in a halfway stage of switching from one of the first attitude and the second attitude taken by the coupling portion 34 to the other, and Figure 3(c) is a plan view of the bending member 32 when the coupling portion 34 is in the second attitude. A reference sign L1 shows the length of the elastic portion 35 in the front-back direction, while a reference sign L2 shows the length of the coupling portion 34.

If a force biasing the coupling portion 34 inward is applied to the coupling portion 34 taking the first attitude, a force F acting in a stretching direction of the coupling portion 34 acts on each of connection portions P between the coupling portion 34 and the elastic portion 35. The force F is divided into a component force F1 biasing the connection portion P inward and a component force F2 stretching the elastic portion 35.

The component force F2 acts to stretch the elastic portion 35 but a shrinking elastic force acts on the elastic portion 35 against the component force F2.

When the force biasing the coupling portion 34 inward is large, the length of stretching of the elastic portion 35 becomes long, the coupling portion 34 is apt to curve inward. However, when the force biasing the coupling portion 34 inward is small, the length of stretching of the elastic portion 35 is short, so that the coupling portion 34 does not curve inward and the first attitude is maintained.

When the force biasing the coupling portion 34 inward becomes large, the elastic portion 35 is stretched, so that the length L1 of the elastic portion 35 in the front-back direction becomes equal to the length L2 of the coupling portion 34.

After the lengths L1 of the elastic portion 35 in the front-back direction has become equal to the length L2 of the coupling portion 34, when a force biasing the coupling portion 34 inward is further applied to the coupling portion 34, the coupling portion 34 deforms from a straight state to an inwardly convex-shaped curved state, and the coupling portion 34 curves inward by elasticity of the elastic portion 35 even if the force biasing the coupling portion 34 inward is removed. The coupling portion 34 takes the second attitude (Figure 3(c)). At this time, since the bending member 32 oscillates to generate sound due to the kind of the material of the bending member 32 or the magnitude of the elastic force of the elastic portion 35, a user can also confirm the attitude switching through the sound.

When the coupling portion 34 is switched from the second attitude to the first attitude, switching is performed in the order of the attitude shown in Figure 3(c), the attitude shown in Figure 3(b), and the attitude shown in Figure 3(a).

For of explanation, it has been assumed in the above that after the length L1 of the elastic portion 35 in the front-back direction has become equal to the length L2 of the coupling portion 34, the attitude switching occurs, but it is not required necessarily that the length L1 of the elastic portion 35 in the front-back direction become equal to the length L2 of the coupling portion 34, and the attitude switching may take place in a curved state of the coupling portion 34 and in such a state that the length L1 of the elastic portion 35 in the front-back direction is shorter than the length L2 of the coupling portion 34.

In the glasses frame 1 provided with the temples 3 according to this embodiment, when the coupling portion 34 is switched to the second attitude at a time at which a user wears the glasses frame 1, the coupling portions 34 are curved inward in a convex shape such that the back end portion of the temple member 3a is directed outward, so that the distance between the back end portions of left and right temple members 3a becomes relatively wide, which results in that the user can wear the glasses frame 1 easily.

Further, after the user wears the glasses frame 1, the user switches the attitude of the coupling portions 34 to the first attitude, so that the coupling portions 34 curve outward in a convex shape such that the back end portions of the temple members 3a are directed inward, which results in that the temple members 3a are kept fitted to face sides of the user.

Thereby, the holding property of the glasses frame 1 can be enhanced as compared with that of a conventional glasses frame. Further, the back end portions of the temple members 3a are directed outward by switching the attitude of the coupling portions 34 to the second attitude at a removal time of the glasses frame 1, so that the distance between the back end portions of the left and right temples members 3a becomes relatively wide, which results in easy removal of the glasses frame 1.

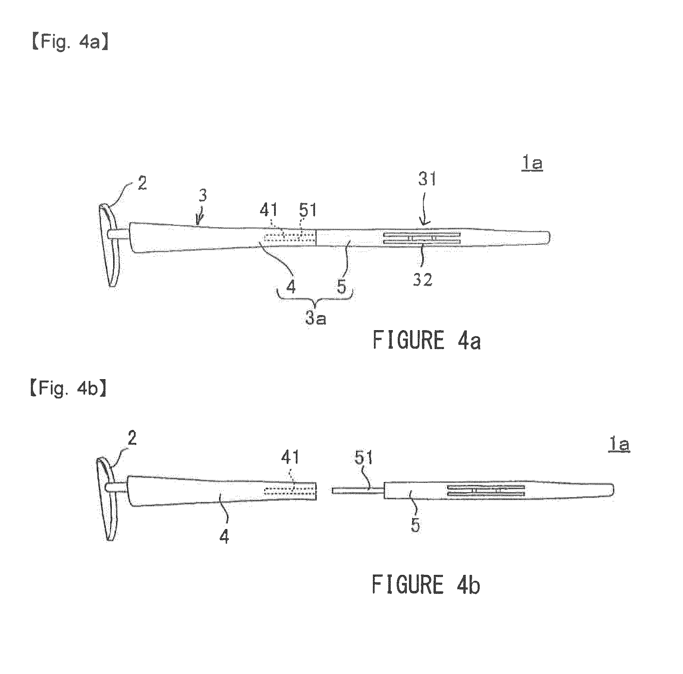

Next, a temple according to a second embodiment will be described with reference to Figures 4(a) and 4(b).

Figures 4(a) and 4(b) are side views of a glasses frame provided with temples according to this embodiment, Figure 4(a) is a side view of a glasses frame in such a state that a rear portion constituting a temple has been attached to a front portion constituting the temple, and Figure 4(b) is a side view in such a state that the rear portion has been detached from the front portion.

The temple according to the first embodiment is composed of a one-piece member which cannot be separated to two pieces in the front-back direction, but the temple according to this embodiment is composed of members which can be separated in the front-back direction, and the remaining configuration of this embodiment is the same as that of the first embodiment.

A temple member 3a according to this embodiment is composed of a front portion 4 configured to be attachable to the front frame portion 2 of the glasses frame 1a and a rear portion 5 detachably attached to the front portion 4, and the rear portion 5 is provided with a deformable region portion 31.

The rear portion 5 is provided with an insertion portion 51 projecting forward at a front end portion thereof, and the front portion 4 is provided with a holding hole 41 holding the insertion portion 51 at a back end portion thereof.

By inserting the insertion portion 51 into the holding hole 41, the rear portion 5 can be attached to the front portion 4. When the rear portion 5 is detached from the front portion 4, the insertion portion 51 can be pulled out of the holding hole 41.

Incidentally, the configuration that the rear portion 5 and the front portion 4 are made attachable to/detachable from each other is not limited to the above configuration, and any configuration that the rear portion 5 and the front portion 4 are made attachable to/detachable from each other can be adopted. For example, the rear portion 5 and the front portion 4 may be fixed to each other using a screw.

Since the rear portion 5 provided with the deformable region portion 31 is attachable to/detachable from the front portion 4, the rear portion 5 can be replaced by another rear portion. For example, if a plurality of rear portions 5 different in degree of curvature in the first attitude and the second attitude is prepared, the degree of curvature of the coupling portion in the first attitude and the second attitude can be changed by only replacement of the rear portion 5, so that the holding property of the glasses frame 1a can be adjusted easily. Furthermore, even if a defect occurs in the deformable region portion 31, only the rear portion 5 can be replaced by another rear portion instead of replacement of the entire temple member 3a, which results in low cost. Further, by preparing a rear portion which is not provided with the deformable region portion 31 and performing replacement with such a rear portion, the temple can be used as a conventional temple.

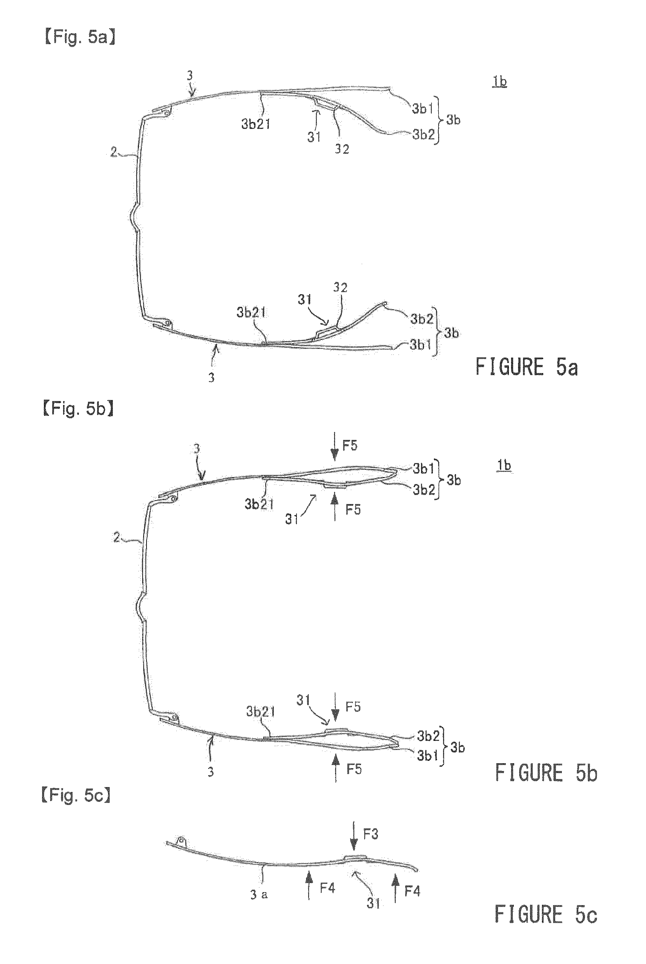

Next, a temple according to a third embodiment will be described with reference to Figures 5(a) to 5(c).

Figures 5(a) to 5(c) are views for explaining an attitude-switching action of a bending member according to this embodiment, Figure 5(a) is a plan view of a glasses frame provided with a temple according to this embodiment when a coupling portion is in the first attitude, Figure 5(b) is a plan view of the glasses frame when the coupling portion is in the second attitude, and Figure 5(c) is a plan view of the temple of the first embodiment.

A temple member 3b is composed of a temple main body 3b1 configured so as to be attachable to a front frame portion 2 of a glasses frame 1b, and an auxiliary temple 3b2 having a front end portion 3b21 attached to the temple main body 3b1. The auxiliary temple 3b2 is attached so as to face an internal face of the temple main body 3b1, and a back end portion of the auxiliary temple 3b2 extends up to a position facing a back portion of the temple main body 3b1. As a method for attaching the front end portion 3b21 to the temple main body 3b1, for example, there are screwing, adhesion and the like, and the temple main body 3b1 and the front end portion 3b21 may be integrally molded.

The auxiliary temple 3b2 is provided with a deformable region portion 31 at a portion of the auxiliary temple 3b2 in a longitudinal direction thereof. The configuration of the deformable region portion 31 is the same as that of the deformable region portion 31 involved in the temple member 3a according to the first embodiment.

Next, an attitude-switching action of the coupling portion will be described.

Since the auxiliary temple 3b2 is disposed to face the temple main body 3b1, when the coupling portion 34 of the bending member 32 in the deformable region portion 31 is switched from the second attitude to the first attitude, the back end portion of the auxiliary temple 3b2 is caused to abut on the temple main body 3b1, so that switching can occur due to application of a force to the deformable region portion 31 about the abutting portion serving as a fulcrum.

In the temple 3 according to the first embodiment, as shown in Figure 5(c), a force F3 pressing the vicinity of the deformable region portion 31 from the inside to the outside and forces F4 pressing a front portion and a rear portion of the deformable region portion 31 from the outside to the inside are required for switching of the attitude of the coupling portion 34 of the bending member 32 from the second attitude to the first attitude.

In this embodiment, however, as shown in Figure 5(b), when the coupling portion 34 of the bending member 32 is in the second attitude, the back end portion of the auxiliary temple 3b2 abuts on an internal face of the back end portion of the temple main body 3b1. When forces F5 are applied such that the vicinity of the deformable region portion 31 of the auxiliary temple 3b2 and a portion of the temple main body 3b1 facing the deformable region portion 31 go close to each other, the coupling portion 34 is deformed about the back end portion of the auxiliary temple 3b2 and the back end portion of the temple main body 3b1 which have abutted on each other serving as a fulcrum, so that switching from the second attitude to the first attitude takes place easily.

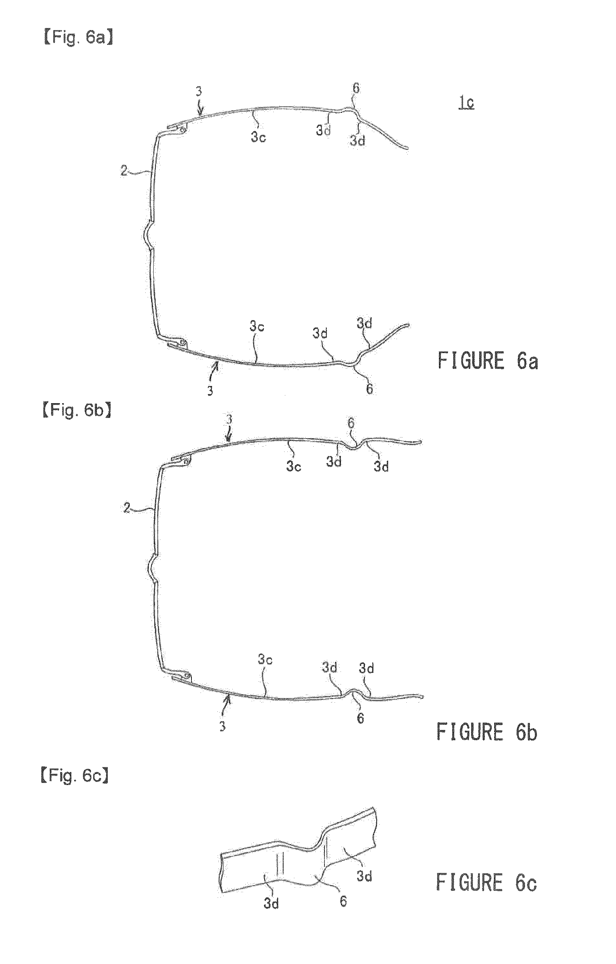

Next, a temple according to a fourth embodiment will be described with reference to Figures 6(a) to 6(c).

Figures 6(a) to 6(c) are views showing a configuration of a temple according to this embodiment, Figure 6(a) is a plan view of a glasses frame provided with temples according to this embodiment when a coupling portion is in the first attitude, Figure 6(b) is a plan view of the glasses frame when a curved portion is in the second attitude, and Figure 6(c) is a perspective view of the temple when the coupling portion of a left temple of the glasses frame is in the first attitude.

A glasses frame 1c includes temples 3, and each temple 3 includes a temple member 3c configured to be attachable to a front frame portion 2.

The temple member 3c is provided with a curved portion 6 having flexibility and curving in inner and outer directions in a portion of the temple member 3c in a longitudinal direction thereof.

The curved portion 6 is formed to be thinner in thickness than adjacent portions 3d adjacent to the curved portion 6 at the front and the back thereof.

The attitude of the curved portion 6 can be switched to the first attitude or the second attitude in the same manner as the deformable region portion 31 of the temple member according to the first embodiment, and the materials of the curved portion 6 and the adjacent portions 3d are selected and the shapes of the curved portion 6 and the adjacent portions 3d are designed such that after the switching, the switched attitude is maintained until a predetermined magnitude of a force is applied to the curved portion 6. For example, as the materials of the curved portion 6 and the adjacent portions 3d, such a metal as magnesium or aluminum, or a resin can be used.

Since the curved portion 6 is switched to the first attitude that it has curved outward in a convex shape and the second attitude that it has curved inward in a convex shape, an advantageous effect similar to that of the temple member according to the first embodiment can be obtained. Further, since the configuration of the curved portion is simple, low cost can be achieved.

In the above-described respective embodiments, the example where the bending member is constituted to be integral with temple member in the deformable region portion in the temple has been shown, but the bending member may be constituted as a member separated from the temple member. Next, an example where a temple using the bending member formed as a separate member is applied to a pair of sunglasses for medical use or a pair of sunglasses for sport use will be described.

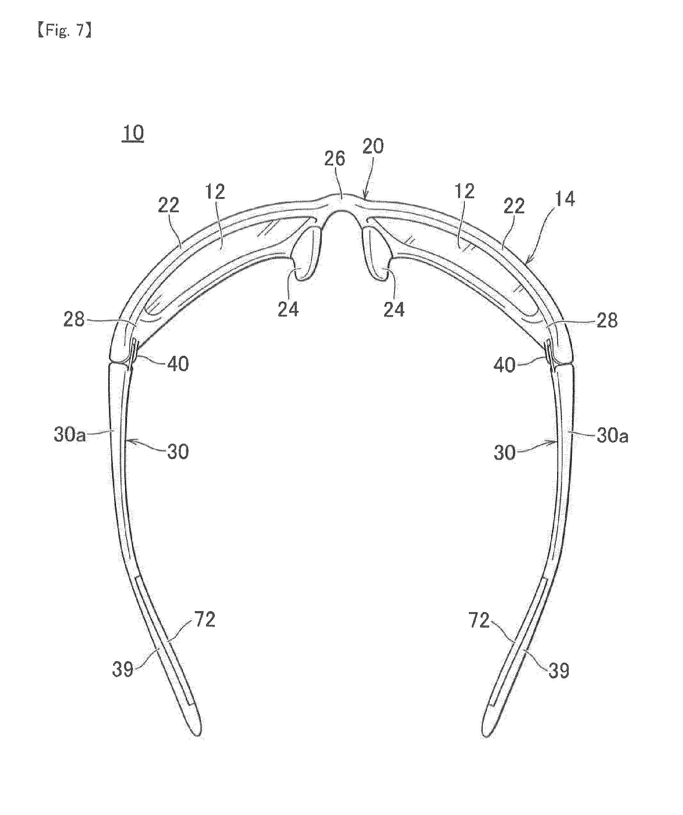

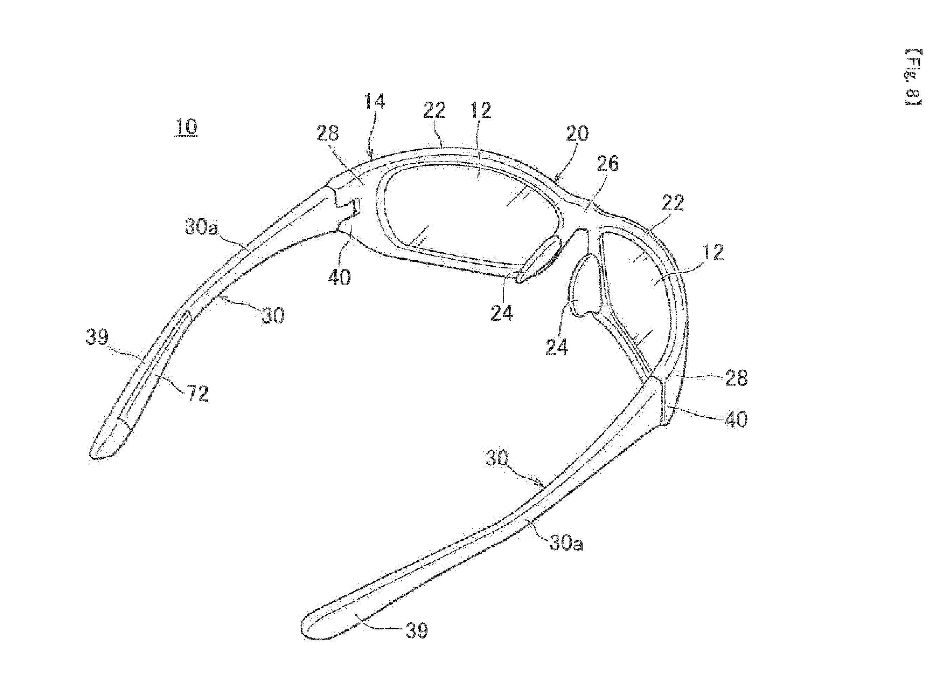

Figure 7 is an illustrative view showing one example of a pair of eyeglasses using the temple of the present invention, and Figure 8 is a perspective view of the pair of eyeglasses. A pair of eyeglasses 10 includes left and right lenses 12. The temple of this invention can obtain a large effect when it is used in a pair of sunglasses for medical use or a pair of sunglasses for sport use. As the pair of sunglasses for medical use, for example, there is one used for protecting an eye(s) after a surgery for cataract, macular degeneration or the like. In such a pair of sunglasses for medical use, a light-shielding lens which cuts short wavelength lights of 500 nm or less adversely affecting an eye and allows lights with wavelengths other than the short wavelength lights to pass is used. Further, in the pair of sunglasses for sport use, also, light-shielding lenses are used to cut short-wavelength lights causing glare. Incidentally, the lenses 12 are ordinarily formed to be curved to a certain extent, but particularly, in the pair of sunglasses for sport use or the like, the lenses 12 are formed to be curved largely from a front face of the user's face toward tails of the user's eyes in order to prevent wind or light from entering from sides of the user's head.

In general, when a pair of glasses is manufactured, the face of a user and each lens is adjusted to have a predetermined distance. However, when the position of the pair of glasses moves from a predetermined wearing position due to an active motion of the user, such a case may occur that a clearance between the face and the lens becomes large, so that light enters the eye from the clearance. In particular, in a case of a patient just after he/she has subjected to surgery of his/her eye(s), it is necessary to prevent short-wavelength lights from entering his/her eye(s). Further, for an athlete, it is thought that when a pair of sunglasses moves from a predetermined position due to his/her active motion, he/she feels glare due to short-wavelength lights entering his/her eyes from a clearance between his/her face and the lens, which results in his/her slump. Therefore, these pairs of glasses 10 are required to be hard to move from their predetermined wearing positions. The present invention relates to a temple that can obtain such a pair of glasses.

When the pair of glasses 10 is a pair of sunglasses for medical use or a pair of sunglasses for sport use, as described above, lenses 12 are formed to be curved from a front face of the user's face toward sides of the face to cover user's eyes. Therefore, an upper end portion of the lens 12 is formed above an eye of the user, a lower end portion of the lens 12 is formed below the eye, one of side end portions of the lens 12 is formed to cover the inner corner of the eye along the nose, and the other of side end portions of the lens 12 is formed to cover the tail of the eye.

The lenses 12 are attached to a front frame portion 20 of a frame 14. The front frame portion 20 includes rims 22 supporting the lenses 12. The rims 22 are formed so as to surround peripheries of the lenses 12, and the lenses 12 are fitted into the rims 22. That is, the rims 22 are formed to be curved over a region from the nose of the user to left and right tails of the eyes above and below the eyes. Therefore, in such a case as a pair of sunglasses for medical use or a pair of sunglasses for sport use, the rims 22 are formed to be curved so as to expand in front of the eyes of a user wearing the pair of glasses 10 along regions on above and below eyes.

Portions of two rims 22 opposed to each other are formed to gradually spread obliquely downward. The opposed portions of the rims 22 are formed with pads 24 projecting inward in the curving directions of the rims 22. The pads 24 are formed of, for example, soft resin. When the user wears the pair of glasses 10, the pads 24 abut on his/her nose to make the pair of glasses 10 stable in a predetermined position. The rims 22 supporting the left and right lenses 12 are coupled to each other by a bridge 26.

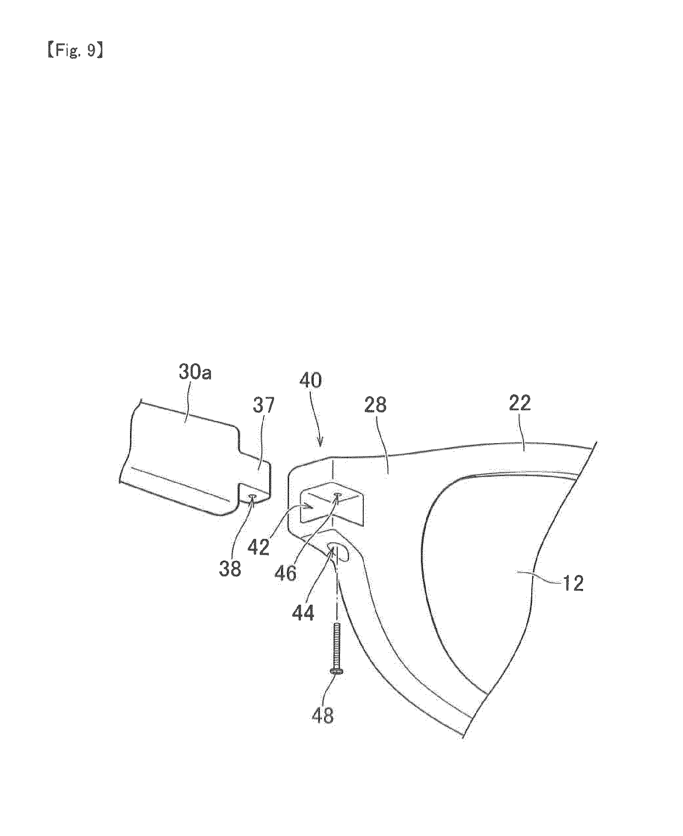

Further, at both end portions of the two rims 22 coupled to each other by the bridge 26, endpieces 28 are formed. The front frame portion 20 is formed of the rims 22, the pads 24, the bridge 26, the endpieces 28, and the like. The endpieces 28 are formed at end portions of the rims 22. Hinge portions 40 are formed at the endpieces 28. The temples 30 are pivotally and foldably attached to the endpieces 28 via the hinge portions 40. As shown in Figure 9, the hinge portion 40 includes a cut portion 42 opened toward the inside of curvature of the rim 22. A through-hole 44 is formed on a lower face of the hinge portion 40 toward the cut portion 42. Further, a female screw hole 46 is formed on a face of the inside of the cut portion 42 of the hinge portion 40 opposed to the through-hole 44. Therefore, a screw 48 can be screwed into the female screw portion 46 so as to penetrate the cut portion 42 via the through-hole 44.

The temple 30 includes a lengthwise temple member 30a, and a projection portion 37 fitted into the cut portion 42 of the hinge portion 40 is formed at an end portion of the temple member 30a. The projection portion 37 is formed in a plate shape, for example, and a through-hole 38 is formed in the plate-shaped projection portion 37. The projection portion 37 is fitted into the cut portion 42 of the hinge portion 40, and in this state, the screw 48 is inserted into the through-hole 44 of the hinge portion 40 and the through-hole 38 of the projection portion 37 to be screwed into the female screw portion 46. Therefore, the temple member 30a is attached to the hinge portion 40 to be openable and closable to the rim 22. Incidentally, since the cut portion 42 is formed so as to be opened toward the inside of curvature of the rim 22, when the temple member 30a is opened, the projection portion 37 abuts on an inside wall of the cut portion 42, so that it is prevented from being opened outward beyond a predetermined position.

Furthermore, a deformable region portion 39 is formed on a distal end side, in a longitudinal direction of the temple member 30a, of the temple member 30a extending from the hinge portion 40. The temple member 30a may be formed so as to extend from the hinge portion 40 to the deformable region portion 39 approximately straightly, or it may be formed so as to slightly lower in a downward direction at the deformable region portion 39 on the distal end side of the temple member 30a. When the pair of glasses 10 is worn by a user, the deformable region portion 39 is hooked to an ear of the user to make the position of the pair of glasses 10 stable. Therefore, the deformable region portion 39 is formed so as to extend from an upper portion of the ear rearward, namely to the back of the user's head during wearing of the pair of glasses 10.

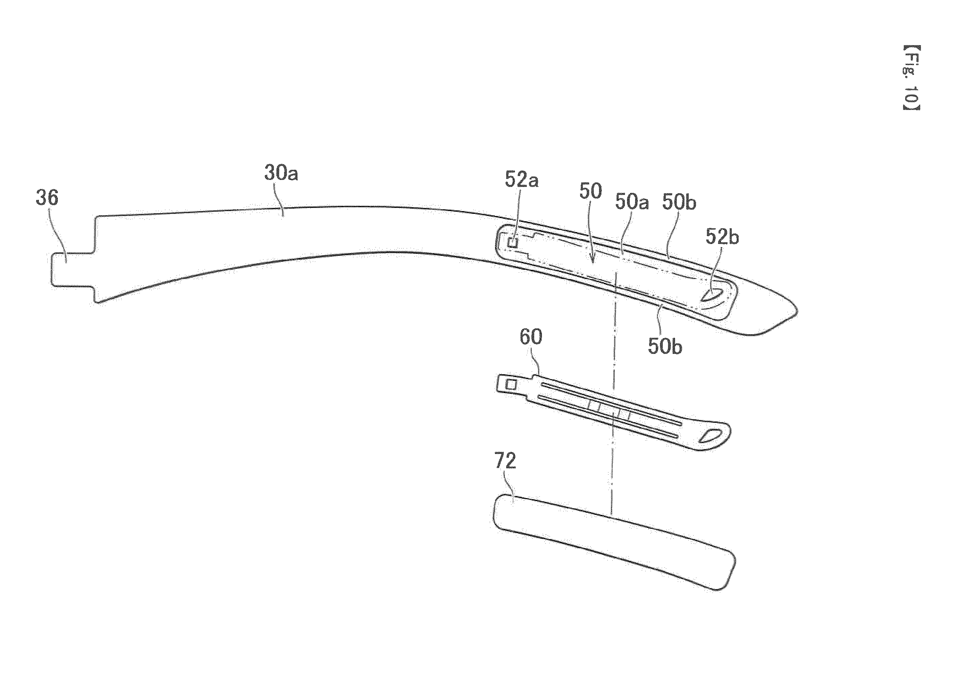

As shown in Figure 10, a recessed portion 50 is formed in the deformable region portion 39 of the temple member 30a. The recessed portion 50 is formed on an inner side of the temple member 30a in an opening-closing direction. The recessed portion 50 is formed in a rectangular shape in a plan view over an approximately-whole region of the deformable region portion 39 in a longitudinal direction and in a widthwise direction except for the distal end portion of the deformable region portion 39 in the longitudinal direction thereof. Here, the term "longitudinal direction" means the orientation of the deformable region portion 39 from a user's ear toward the back of the user's head when the user has worn the pair of glasses 10, and the term "widthwise directions" means the orientation of the deformable region portion 39 corresponding to a vertical direction of the user's face. A bottom face 50a of the recessed portion 50 and side walls 50b on both sides thereof in the widthwise direction are formed to have such thicknesses that the deformable region portion 39 of the temple member 30 can be bent and deformed in an opening-closing direction. Two convex portions 52a and 52b are formed on the bottom face 50a of the recessed portion 50. The convex portions 52a and 52b formed at both end sides of the recessed portion 50 in the longitudinal direction. In Figure 10, one convex portion 52a is formed in a rectangular shape in a plan view, while the other convex portion 52b is formed to be approximately D-shaped in a plan view, but these shapes may be modified arbitrarily.

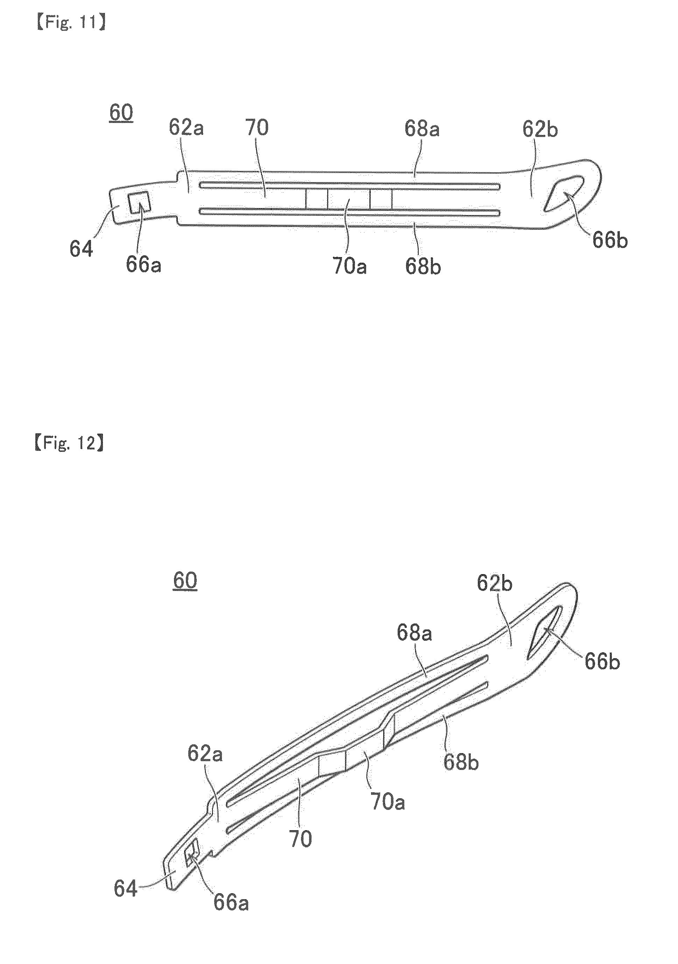

A bending member 60 formed in a lengthy shape as a whole is fitted into the recessed portion 50 of the temple member 30a. The bending member 60 is formed to have a length extending over an approximately whole region of the recessed portion 50 in the longitudinal direction and a width smaller than the width of the recessed portion 50. The bending member 60 is formed of a material having elasticity, for example, such a metal as titanium or stainless steel. The bending member 60 has a structure similar to that of the bending member 32 formed integrally with the temple member 3a in the first embodiment. That is, as shown in Figure 11 to Figure 13, the bending member 60 includes plate-shaped end portions 62a and 62b opposed to each other in the longitudinal direction. A projection portion 64 having a width smaller than a whole width of the bending member 60 is formed on one end portion 62a. The projection portion 64 is formed so as to project in a slightly inclined fashion toward one side of the bending member 60 in the widthwise direction. A through-hole 66a extending in the thickness direction of the projection portion 64 is formed in the projection portion 64. The through-hole 66a of the projection portion 64 is formed to have a rectangular shape corresponding to the one convex portion 52a formed on the recessed portion 50 of the temple member 30a. Further, the other end portion 62b of the bending member 60 is formed so as to extend in a slightly inclined fashion toward the other side of the bending member 60 in the widthwise direction. A through-hole 66b with an approximately D-shape corresponding to the other convex portion 52b formed on the recessed portion 50 of the temple member 30a is formed on the other end portion 62b of the bending member 60a

Two coupling portions 68a and 68b are formed between the two end portions 62a and 62b. The coupling portions 68a and 68b are formed in a band shape connecting the two end portions 62a and 62b on both sides of the bending member 60 in the widthwise direction. Further, a band-shaped elastic portion 70 spaced from the two coupling portions 68a and 68b and connecting the two end portions 62a and 62b is formed at a central portion of the bending member 60 in the widthwise direction. The elastic portion 70 has a folded portion 70a with an approximately U-shaped section taken along a longitudinal direction, formed by folding a band-shaped intermediate portion of the elastic portion 70 in a thickness direction. When a tension is applied to the elastic portion 70, the folded portion 70a is stretched so that a force against the tension occurs due to the elasticity. The elastic portion 70 couples the two end portions 62a and 62b so as to linearly pull the two end portions 62a and 62b in a state where the coupling portions 68a and 68b on the both sides of the elastic portion 70 have been curved.

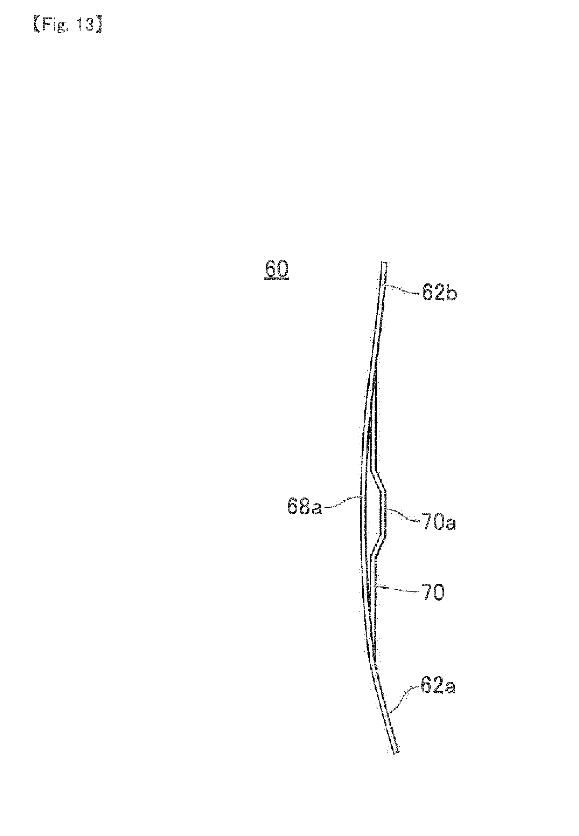

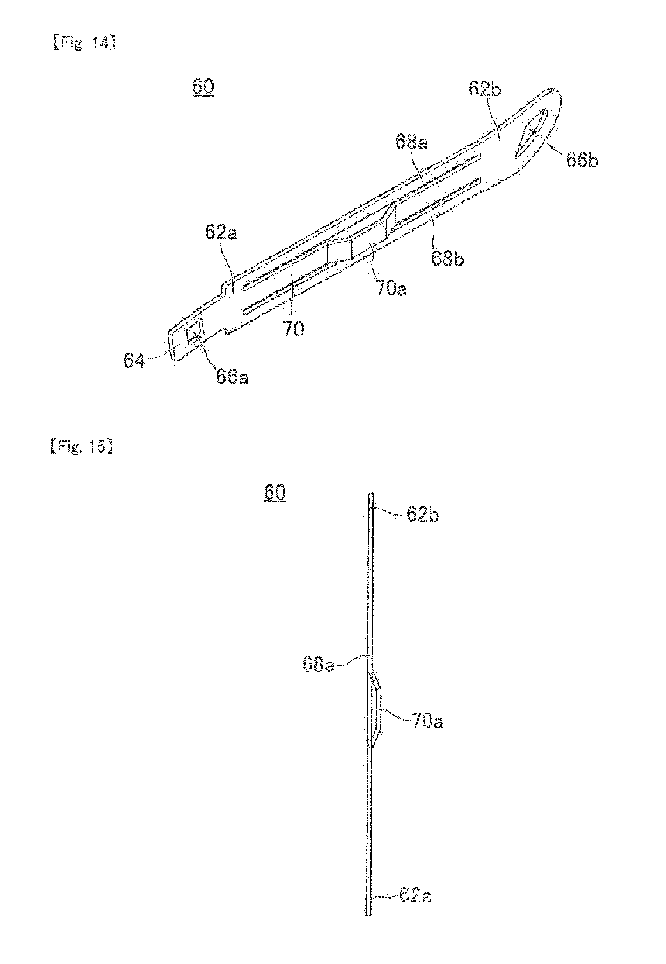

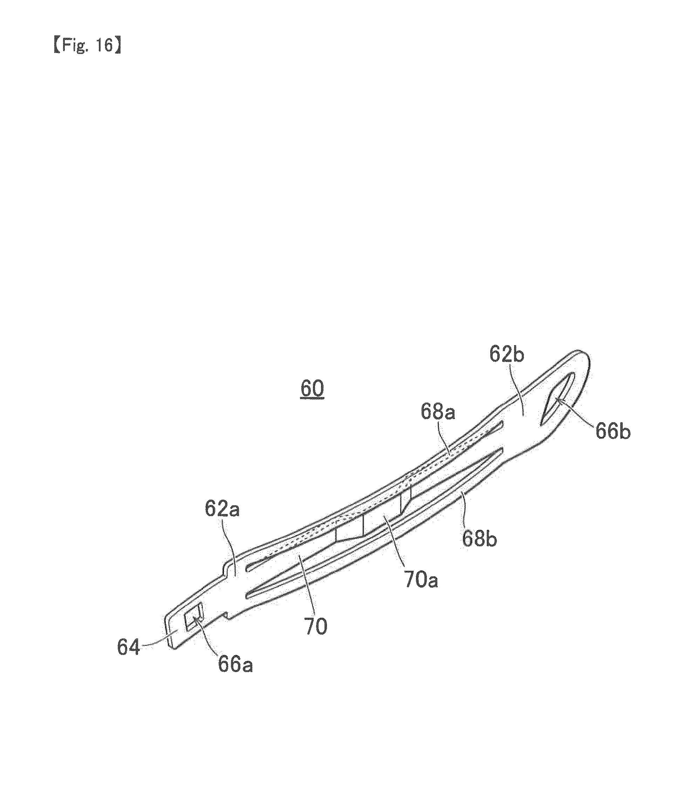

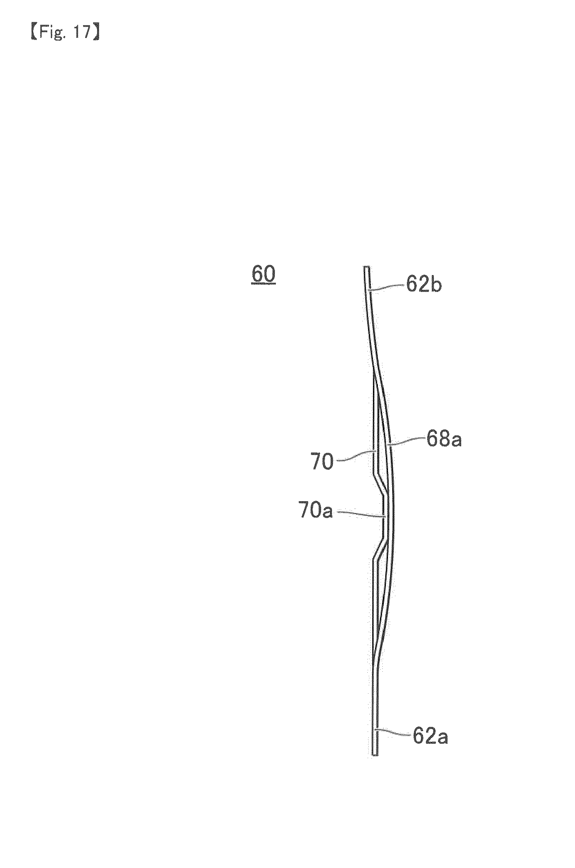

Switching between the curved states of the bending member 60 is performed in the same manner as described with reference to Figures 3(a) to 3(c). That is, for example, as shown in Figure 12 and Figure 13, the coupling portions 68a and 68b are curved toward one side in a thickness direction thereof. At this time, the folded portion 70a of the elastic portion 70 is disposed so as to project from the recessed sides of curvatures of the coupling portions 68a and 68b. Here, when a force is applied so as to reduce the curvatures of the coupling portions 68a and 68b, as shown in Figure 14 and Figure 15, the coupling portions 68a and 68b changes to non-curved states, so that the elastic portion 70 is changed to a pulled state. Therefore, a force is applied to the coupling portions 68a and 68b in the non-curved states so as to compress them due to the elasticity of the elastic portion 70, so that the coupling portions 68a and 68b are curved such that curved states thereof inverted to the original curves thereof occur. At this time, as shown in Figure 16 and Figure 17, the folded portion 70a of the elastic portion 70 is disposed so as to project to the recessed sides of the curvatures of the coupling portions 68a and 68b. In this manner, the bending member 60 can be switched between the two states curved to be inverted to each other, namely, the first attitude and the second attitude. In such a bending member 60, when switching between the two curved states is performed by elasticity of the elastic portion 70, energy accumulated when the elastic portion 70 has stretched is converted to oscillation energy of the bending member 60, so that bending member 60 oscillates to generate sound. Thus, the bending member 60 is formed of a material having flexibility and generating sound when its attitude is switched to the other. By changing a size of the bending member 60 such as a thickness thereof, a force required to perform attitude switching can be changed. Therefore, the size of the bending member 60 is set such that the attitude of the bending member 60 can be manually switched to the other attitude in a state where a user has worn the pair of glasses.

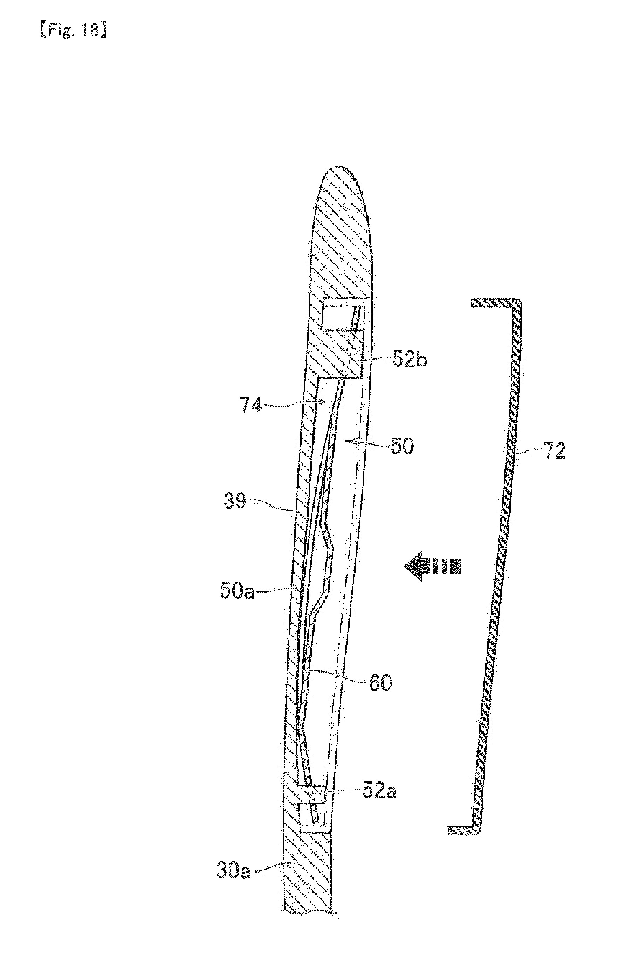

As shown in Figure 18, such a bending member 60 is fitted into the recessed portion 50 of the temple member 30a. As shown in Figure 18, one convex portion 52a formed on the bottom face 50a of the recessed portion 50 of the temple member 30a is fitted into one through-hole 66a of the bending member 60, while the other convex portion 52b formed on the bottom face 50a of the recessed portion 50 of the temple member 30a is fitted into the other through-hole 66b of the bending member 60, so that the bending member 60 is fixed to the temple member 30a within the recessed portion 50. Further, a cover member 72 is attached so as to cover the recessed portion 50 having the bending member 60. The cover member 72 is formed of rubber-like elastic body such as elastomer, or the like. The cover member 72 is formed to have a shape corresponding to the shape of the recessed portion 50 using a sheet-like material, and a projection frame for fitting the cover member 72 into the recessed portion 50 is formed on an outer peripheral portion of the cover member 72. By fitting the cover member 72 into the recessed portion 50, the cover member 72 is attached to the temple member 30a so that the temple 30 is formed. Therefore, a cavity portion 74 is formed in a portion surrounded by the temple member 30a and the cover member 72, so that the bending member 60 is received in the cavity portion 74.

In this pair of glasses 10, the temple member 30a may be formed, for example, using such a material as celluloid, acetate, or TR-90, but using TR-90 having resiliency is particularly preferable. Since the recessed portion 50 is formed in the deformable region portion 39 on the temple member 30a, the temple member 30a is made thin in the deformable region portion 39, so that the thinned portion is deformable. Therefore, by fixing the bending member 60 to the temple member 30a within the cavity portion 74, the shape of the temple 30 in the deformable region portion 39 is changed according to the curved state of the bending member 60. This, since the bending member 60 is received in the recessed portion 50 in the deformable region portion 39, the thickness of the deformable region portion 39 is larger than the sum of the outside maximum width between the coupling portions 68a and 68b of the bending member 60 and the elastic portion 70, the thickness of the wall face of the temple 30 in the recessed portion 50, and the thickness of the cover member 72, but it is preferable that the thickness of the deformable region portion 39 is within a thickness range which does not cause a feeling of strangeness during wearing of the pair of glasses 10. Here, the thickness of the deformable region portion 39 means a size of the deformable region portion 39 corresponding to a direction from a side of the face of a user toward the outside during wearing the pair of glasses 10.

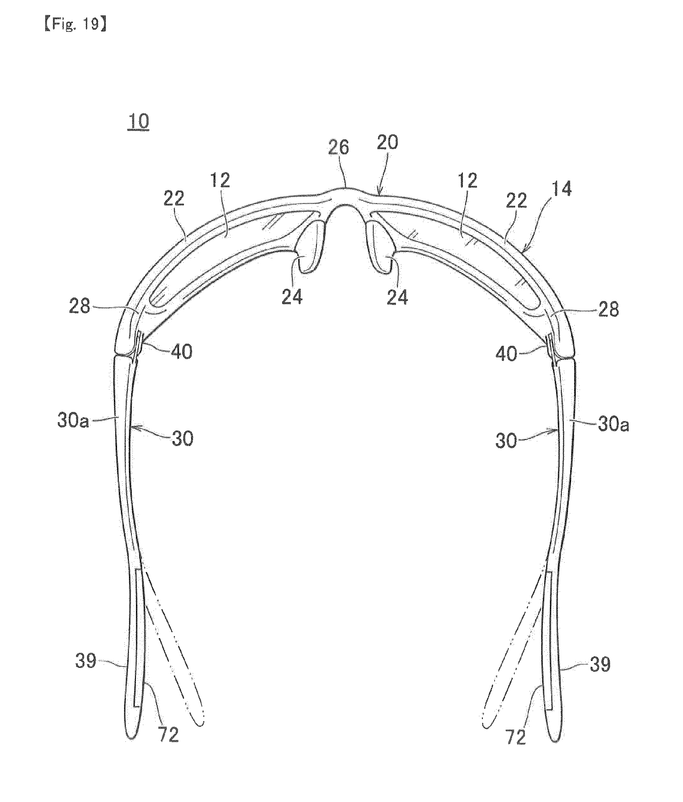

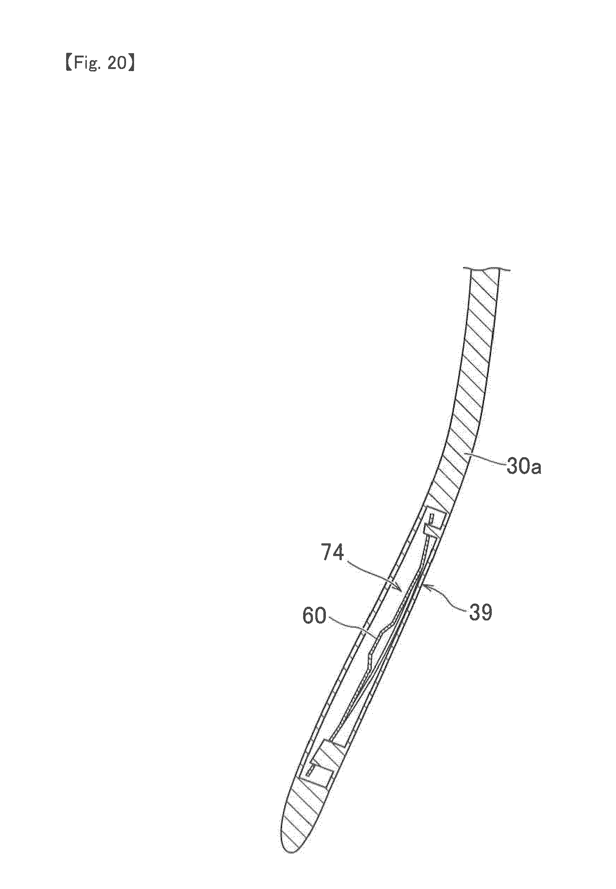

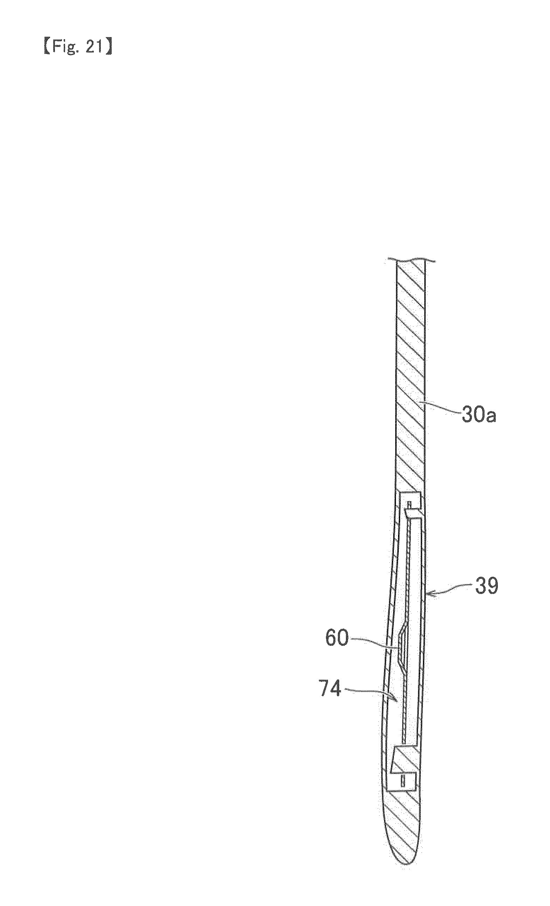

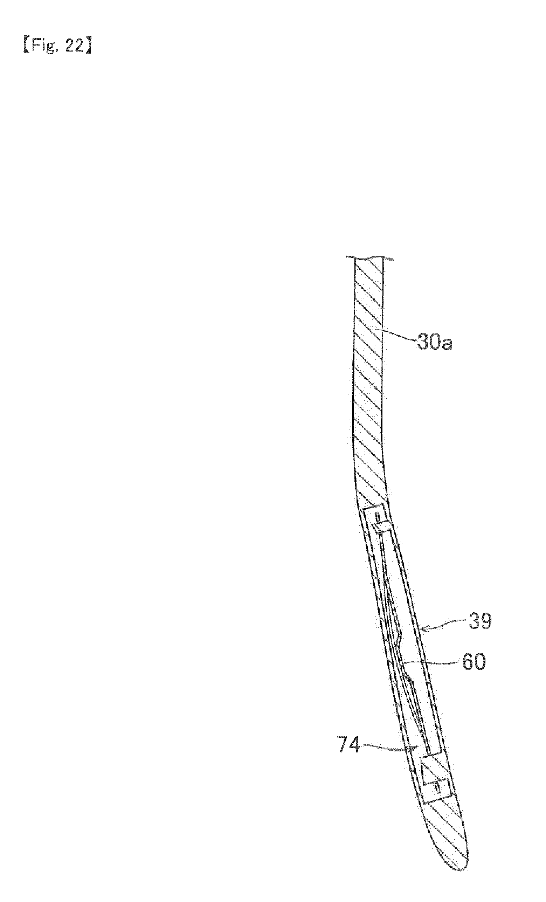

When the bending members 60 are in the first attitude, as shown in Figure 7, deformation occurs such that the distal ends of the deformable region portions 39 of two temples 30 come close to each other. Further, when the bending members 60 are in the second attitude, as shown in Figure 19, deformation occurs such that the distal ends of the deformable region portions 39 of two temples 30 get away from each other. That is, as shown in Figure 20, when the bending members 60 are in the first attitude, deformation occurs such that the distal ends of the deformable region portions 39 of two temples 30 come close to each other. When the coupling portions 68a and 68b are changed to the non-curved state in order to switch the curved state of the bending members 60 to the other one, as shown in Figure 21, the deformable region portions 39 of the temple 30 become approximately linear. Further, by switching the attitude of the bending members 60 to the second attitude, as shown in Figure 22, the distal ends of the deformable region portions 39 of the temples 30 are deformed so as to get away from each other.

Therefore, by performing deformation in a wearing state of the pair of glasses 10 such that the distal ends of the deformable region portions 39 of the temples 30 come close to each other, as shown in Figure 7, the deformable region portions 48 fit the back of the user's head behind the ears. Therefore, the position of the pair of glasses 10 is hard to move from the predetermined worn position, and a distance between the face and each lens can be kept constant. Thereby, a wearing position of a pair of glasses as designed can be maintained, it becomes hard that light enters user's eyes from a clearance between the face thereof and the pair of glasses 10. Therefore, in the case of a pair of sunglasses for medical use worn by a user who has subjected to surgery of his/her eye(s), light adversely affecting the eye(s) can be prevented from entering the eye(s). Further, in the case of a pair of sunglasses for sport use, the pair of sunglasses is prevented from moving even if an athlete wearing the pair of sunglasses moves violently, so that the ability of the athlete can be developed sufficiently. As shown in Figure 19, by performing deformation such that the distal ends of the deformable region portions 39 of two temples 30 get away from each other, attaching and detaching of the pair of glasses 10 can be made easily.

In the pair of glasses 10, since the bending member 60 is received in the cavity portion 74, sound generated at a switching time between the curved states of the bending member 60 is transmitted to the outside via the cavity portion 74. Therefore, a user hears sound when switching between the positions of the deformable region portion 39 of the temple 30 is performed so that he/she can confirm that switching between the positions has been performed reliably. Further, since the bending member 60 is attached inside the temple 30, the bending member 60 cannot be seen from the outside. Therefore, the shape or the pattern of the temple 30 can be designed freely.

Incidentally, the coupling portions 68a and 68b of the bending member 60 are formed to be curved in the thickness direction between the end portions 62a and 62b, but for example, a curvature factor between one end portion 62a and coupling portions 68a and 68b may be made large. In this case, in the temple member 30a shown in Figure 18, the curvature factor of a portion of the temple member 30a positioned close to the front frame portion 20 can be made large. By changing the curvature factor between the coupling portions 68a and 68b and the end portions 62a and 62b, how to curve of the temple member 30a can be adjusted. Further, by adjusting the curvature factor of the whole coupling portions 68a and 68b, the curvature factor of the whole deformable region portion 39 can be adjusted.

Furthermore, in the example shown in Figure 18, the bending member 60 is attached to the temple member 30a such that the folded portion 70a of the elastic portion 70 projects toward the side of the opening portion of the recessed portion 50, but the bending member 60 may be attached to the temple member 30a such that the folded portion 70a of the elastic portion 70 projects toward the side of the bottom face 50a of the recessed portion 50. By switching the curvatures of the coupling portions 68a and 68b from one to the other regardless of an attaching direction of the bending member 60, the orientation of the end portion of the temple member 30a can be changed.

Incidentally, in the above-described example, the recessed portion 50 has been formed on the inside of the temple member 30a in the opening and closing direction thereof, but it may be formed on the outside of the temple member 30a in the opening and closing direction thereof. Even in this case, the convex portions 52a and 52b are formed in the recessed portion 50, so that the bending member 60 can be fixed to the temple member 30a within the recessed portion 50 by fitting the convex portions 52a and 52b into the through-holes 66a and 66b of the bending member 60.

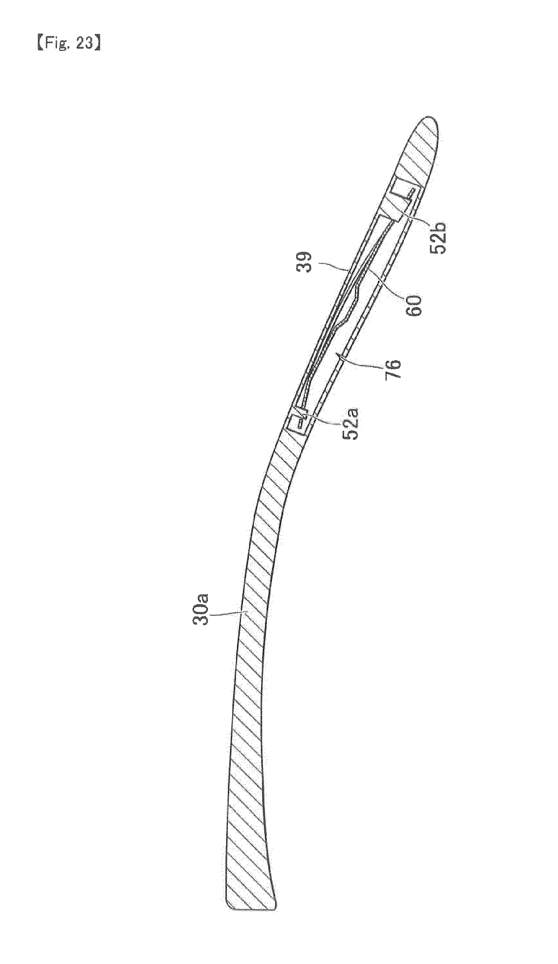

Further, as shown in Figure 23, a through-hole 76 may be formed in the temple member 30a in the deformable region portion 39 in order to attach the bending member 60 within the temple 30. The through-hole 76 is formed to extend through the deformable region portion 39 along the longitudinal direction of the deformable region portion 39 such that it extends through the deformable region portion 39 in a direction intersecting a pivoting face of the temple 30. In the example shown in Figure 23, the through-hole 76 is formed to extend through the deformable region portion 39 to be opened at an upper side and a lower side of the pair of glasses 10 and extend along the longitudinal direction of the deformable region portion 39. The convex portions 52a and 52b are formed within the through-hole 76 so as to project from one of wall faces to the other. The convex portions 52a and 52b are formed at positions corresponding to the through-holes 66a and 66b of the bending member 60 so as to have shapes corresponding to the through-holes 66a and 66b of the bending member 60 when the bending member 60 is inserted into the through-hole 76.

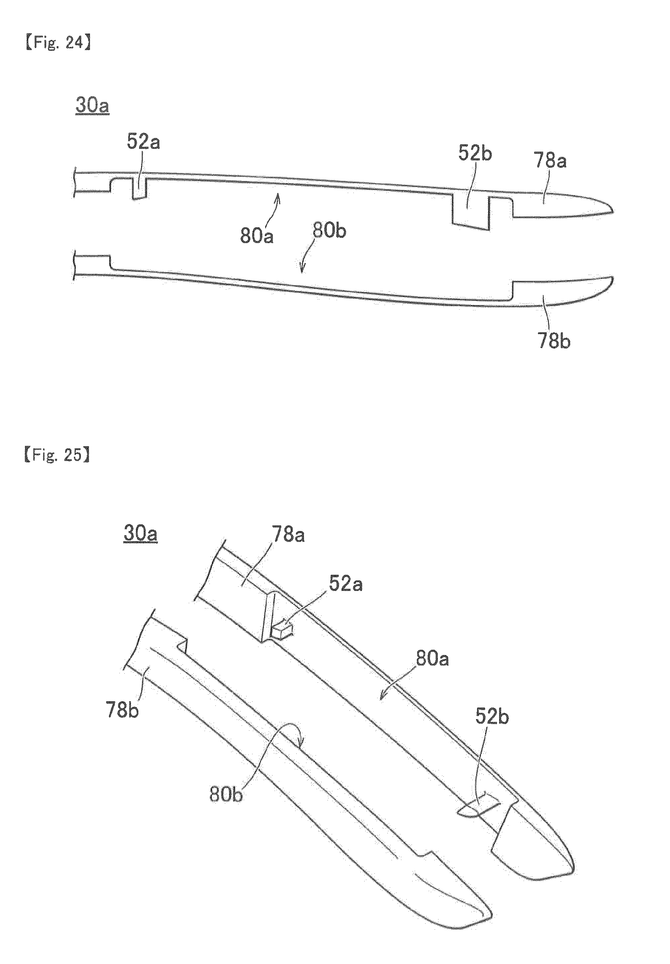

In order to obtain the temple member 39 having such a through-hole 76, as shown in Figure 24 and Figure 25, a first member 78a and a second member 78b having shapes obtained by cutting the temple member 39 at a central portion thereof in the thickness direction are prepared.

The first member 78a is formed with a recessed portion 80a extending from an upper side end portion toward a lower side end portion along the longitudinal direction of the first member 78a. The recessed portion 80a is formed so as to reach the upper side end portion and the lower side end portion of the first member 78a. Convex portions 52a and 52b are formed within the recessed portion 80a so as to project from a wall face of the first member 78a in the thickness direction. The convex portions 52a and 52b are formed to be slightly longer than the size of the recessed portion 80a in the thickness direction.

A recessed portion 80b is formed in the second member 78b at a position corresponding to the recessed portion 80a of the first member 78a. Therefore, by bonding the first member 78a and the second member 78b to each other, the through-hole 76 is formed. At this time, since the convex portions 52a and 52b are formed to be longer than the size of the recessed portion 80a in the thickness direction, when the first member 78a and the second member 78b are bonded to each other, small clearances are formed between the convex portions 52a and 52b and the wall of the second member 78b.

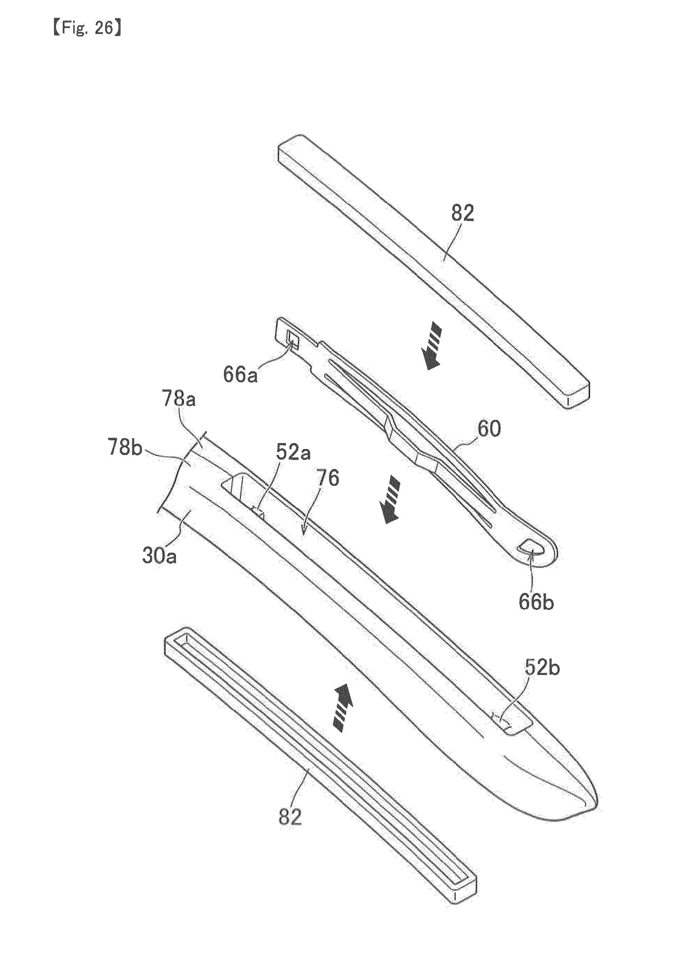

By bonding the first member 78a and the second member 78b to each other in this manner, the temple member 30a having the through-hole 76 is formed. As shown in Figure 26, the bending member 60 is inserted into the through-hole 76 of the temple member 30a. Here, since the small clearances are present between the convex portions 52a and 52b and the wall of the second member 78b within the through-hole76, the bending member 60 is inserted into the through-hole 76 via the clearances and the convex portions 52a and 52b are fitted into the through-holes 66a and 66b of the bending member 60. Thus, the bending member 60 is fixed to the temple member 30a within the through-hole 76. In this state, opening portions of the through-hole 76 of the temple member 30a are closed by cover members 82 formed of elastomer or the like. By closing the opening portions of the through-hole 76, a cavity portion is formed within the temple member 42, and the bending member 60 is received in the cavity portion.

By performing switching between the curved states of the bending member 60, even the temples 30 thus obtained can be switched between two positions corresponding to the state where the distal end of the deformable region portion 39 has been closed and the state where it has been opened. Therefore, the pair of glasses 10 can be worn such that the pair of glasses 10 does not move from the predetermined position, and wearing and removing the pair of glasses 10 can be performed easily. Further, since the bending member 60 cannot be seen from the outside of the temple 30, the shape or the pattern of the temple 30 can be designed freely. Furthermore, since the bending member 60 is received in the cavity portion, sound generated by switching between the curved states of the coupling portions 68a and 68b in the bending member 60 is transmitted to the outside, so that switching between the attitudes of the deformable region portion 39 can be confirmed via the sound.

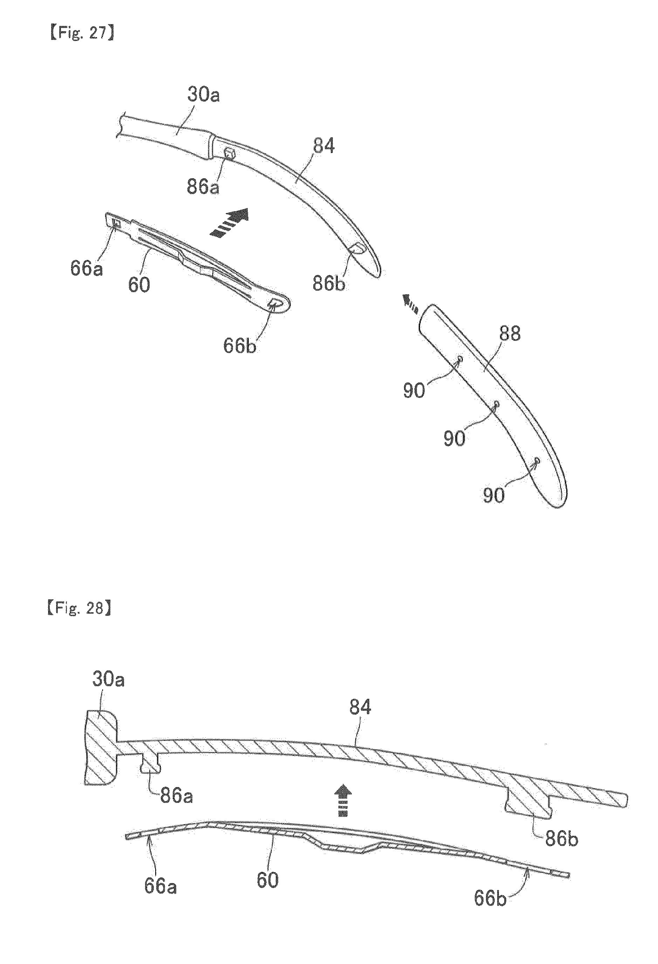

Further, as shown in Figure 27, a tongue-shaped portion 84 may be formed on the distal end side of the temple member 30a in the deformable region portion 39. Here, the tongue-shaped portion 84 is formed to have a thin thickness and it is formed to be bendable on both sides of the temple 30 in the opening and closing direction. Two convex portions 86a and 86b projecting inside of the temple 30 in the opening and closing direction of the temple 30 are formed on the tongue-shaped portion 84. One convex portion 86a is formed in a rectangular shape in a plan view corresponding to the through-hole 66a of the bending member 60. Further, the other convex portion 86b is formed to be approximately D-shaped in a plan view corresponding to the through-hole 66b of the bending member 60. As shown in Figure 28, these convex portions 86a and 86b are formed to be slightly wider on their end portion sides than the widths of the through-holes 66a and 66b of the bending member 60.

The bending member 60 is attached to the tongue-shaped portion 84. At this time, the convex portion 86a is fitted into the through-hole 66a of the bending member 60 and the convex portion 86b is fitted into the through-hole 66b of the bending member 60, so that the bending member 60 is attached to the tongue-shaped portion 84. Here, since the widths of the convex portions 86a and 86b on their end portion sides are formed to be slightly larger, the convex portions 86a and 86b are pressed into the through-holes 66a and 66b of the bending member 60 by pressing the bending member 60 on the side of the tongue-shaped portion 84. When the bending member 60 is attached to the tongue-shaped portion 84, the bending member 60 is prevented from being detached from the tongue-shaped portion 84 owing to bulges of the end portions of the convex portions 86a and 86b.

A cap member 88 formed of a rubber-like material such as elastomer is attached to the tongue-shaped portion 84 attached with the bending member 60. The cap member 88 is formed in a bag shape enclosing the tongue-shaped portion 84 and the bending member 60 so as to cover them from the distal end side of the tongue-shaped portion 84. By capping the cap member 88 from the distal end portion of the tongue-shaped portion 84 toward the proximal end portion thereof, the tongue-shaped portion 84 and the bending member 60 are covered with the cap member 88. Therefore, a cavity portion is formed within the cap member 88, and the bending member 60 is fixed to the tongue-shaped portion 84 within the cavity portion. A portion of the cap member 88 covering the tongue-shaped portion 84 and the bending member 60 serves as a deformable region portion 39 formed at the distal end side of the temple member 30a. Incidentally, a plurality of small holes 90 is formed on a side face of the cap member 88, and sound generated at a switching time between the curved states of the bending member 60 can be heard via the holes 90.

Even the temple 30 thus obtained can be switched between two positions of the state where the distal end portion of the deformable region portion 39 has been opened and the state the distal end portion of the deformable region portion 39 has been closed by performing switching between the curved states of the bending member 60. Therefore, the pair of glasses 10 can be worn so as not to move from the predetermined wearing position and wearing and removing the pair of glasses 10 can be conducted easily. Further, since the bending member 60 cannot be seen from the outside of the temple 30, the shape or the pattern of the temple 30 can be designed freely.

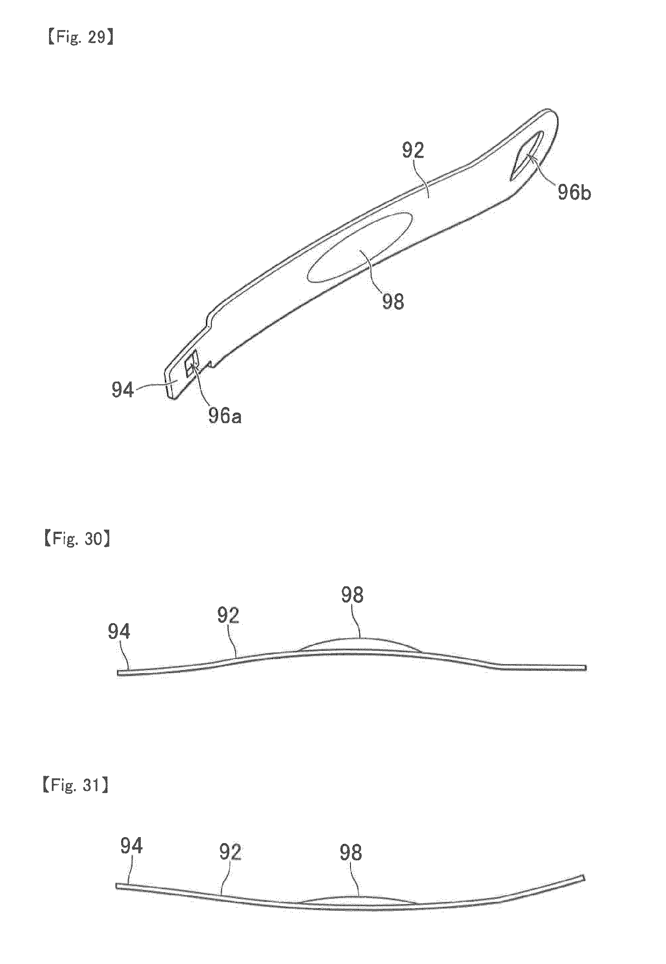

Furthermore, as an example of another bending member, as shown in Figure 29, it is possible to adopt a bending member 92 formed of a sheet of plate-shaped body. The bending member 92 is formed in a plate shape using such an elastic material as metal. A projection portion 94 is formed at one of end portions of the bending member 92 in a longitudinal direction thereof, and, for example, a through-hole 96a fitted with one convex portion 52a (86a) of the temple member 30a is formed in the projection portion 94. Further, a through-hole 96b fitted with the other convex portion 52b (86b) of the temple member 30a is formed in the other end portion of the bending member 92.

The bending member 92 is formed to be curved in one direction in the longitudinal direction thereof. Further, a budging portion 98 bulging in one direction in the thickness direction of the bending member 92 is formed in an intermediate portion of the bending member 92. For example, as shown in Figure 25, the bulging portion 98 is formed to further project from the outside of the curvature of the bending member 92. Such a bending member 92 can be obtained, for example, by press-forming a metal plate.

When a force is applied to the bending member 92 such that the bending member 92 is changed to a non-curved state, the shape of the bulging portion 98 changes so that a force returning to an original shape of the bulging portion 98 occurs. The bending member 92 is forced to return to the curved state due to the force again, but as shown in Figure 26, the curved state can reach the curved state inverted to the first curved state. At this time, the bulging portion 98 changes to a shape projecting from the inside of the curvature of the bending member 92.

Thus, the bending member 92 can be switched between the two curved states. Therefore, even if the bending member 92 is attached to the temple member 30a, switching can be performed between two positions of the closed state of the distal end of the temple 30 and the opened state thereof in the deformable region portion 39. That is, in such a case that a state shown in Figure 30 is the first attitude and a state shown in Figure 31 is the second attitude, as shown in Figure 31, when the bending member 92 is in the first attitude, the distal end of the temple 30 becomes the closed state, and when the bending member 92 is in the second attitude, the distal end of the temple 30 becomes the opened state.

### Reference Signs List

1, 1a, 1b, 1c...glasses frame
2...front frame portion
3, 3a, 3b, 3c...temple
3b1...temple main body
3b2...auxiliary temple
31...deformable region portion
32...coupling portion
33...elastic portion
4...front portion
5...rear portion
6...curved portion
10...a pair of glasses
12...less
14...frame
20...front frame portion
22...rim
24...pad
26...bridge
28...endpiece
30...temple
30a...temple member
39...deformable region portion
40...hinge portion
60...bending member
62a, 62b...end portion
66a, 66b...through-hole
68a, 68b...coupling portion
70...spring portion
72...cover member
74...cavity portion
76...through-hole
82...cover member
84...tongue-shaped portion
86a, 86b...convex portion
88...cap member
92...bending member
96a, 96b...through-hole
98...budging portion

## Claims

1. A temple for a glasses frame, including
a temple member pivotally formed to extend on each side of a front frame portion holding lenses and formed so as to be openable and closable between a position where the temple member extends in a direction intersecting the front frame portion and a position where the temple member extends along the front frame portion, wherein
the temple member is provided with a deformable region portion deforming in inner and outer directions at a portion of the temple member in a longitudinal direction thereof;
a bending member formed to be switchable between curved states inversed to each other is provided in the deformable region portion;
the bending member is composed of two end portions formed at positions opposed to each other, a pair of coupling portions formed of material having flexibility and arranged side by side in a vertical direction so as to couple the two end portions, and an elastic portion coupling the two end portions at a position sandwiched between the pair of coupling portions in curved states of the coupling portions;
the coupling portions are switched between a first attitude curved outward in a convex state and a second attitude curved inward in a convex state;
when the coupling portions are in the first attitude or in the second attitude, the lengths of the coupling portions are longer than the length of the elastic portion in a front-back direction thereof; and
the elastic portion stretches elastically in the course from one attitude of the first attitude and the second attitude of the coupling portions to the other attitude.

2. A temple according to claim 1, wherein when the coupling portions are switched from one attitude of the first attitude or the second attitude to the other attitude, the coupling portions oscillate to generate sound.

3. A temple according to claim 1 or claim 2, wherein the bending member is formed integrally with the temple member.

4. A temple according to any one of claim 1 to claim 3, wherein the temple member is composed of a front portion attachable to the front frame portion of the glasses frame and a rear portion positioned rearward of the front portion and detachably attached to the front portion; and
the rear portion is provided with the deformable region portion.

5. A temple comprising a temple member provided with a temple main body configured to be attachable to a front frame portion of a glasses frame and an auxiliary temple having a front end portion attached to the temple main body and facing the temple main body on an internal face of the temple main body up to a back end portion of the temple main body, wherein
the auxiliary temple is provided with a deformable region portion deforming in inner and outer directions at a portion of the auxiliary temple in a longitudinal direction thereof;
the deformable region portion is provided with a bending member formed to be switchable between curved states reversed to each other;
the bending member is composed of two end portions formed at positions opposed to each other, a pair of coupling portions formed of a material having flexibility and arranged side by side in a vertical direction so as to couple the two end portions, and an elastic portion coupling the two end portions at a position sandwiched by the pair of coupling portions in curved states of the coupling portions;
the coupling portions are switched between a first attitude curved outward in a convex shape and a second attitude curved inward in a convex shape;
when the coupling portions are in the first attitude or in the second attitude, the lengths of the coupling portions are longer than the length of the elastic portion in a front-back direction thereof; and
the elastic portion stretches elastically in the course from one attitude of the first attitude and the second attitude of the coupling portions to the other attitude.

6. A temple for a glasses frame, including
a temple member pivotally formed so as to extend on each side of a front frame portion holding lenses and formed so as to be openable and closable between a position where the temple member extends in a direction intersecting the front frame portion and a position where the temple member extends along the front frame portion, wherein
the temple member has flexibility and has a curved portion curving in inner and outer directions in a portion in a longitudinal direction thereof;
the thickness of the curved portion is thinner than the thickness of portions adjacent before and after the curved portion; and
the curved portion is switched between a first attitude curved outward in a convex shape and a second attitude curved inward in a convex shape.

7. A temple according to claim 1, wherein
the bending member is formed as a member separate from the temple member;
a cavity portion is formed inside the temple member in the deformable region portion; and
the bending member is fitted into the cavity portion so that the bending member is fixed to the temple member so as to curve toward both sides in the opening and closing directions of the temple member opening and closing to the front frame portion,

8. A temple according to claim 7, wherein through-holes are formed in the bending member on both sides of the curvatures of the coupling portions, and two convex portions are formed so as to project from the temple member within the cavity portion, and the convex portions are fitted into the through-holes of the bending member so that the bending member is fixed to the temple member.

9. A temple according to claim 7 or claim 8, wherein the cavity portion is formed, in the deformable region portion, of a recessed portion, formed inside or outside in the opening and closing directions of the temple member and a cover member fitted into the recessed portion so as to cover the recessed portion.

10. A temple according to claim 7 or claim 8, wherein the cavity portion is formed, in the deformable region portion, of a through-hole formed in the temple member in a direction intersecting a pivoting face of the temple member and two cover members closing opening portions on both sides of the through-hole.

11. A temple for a glasses frame, comprising:
a temple member pivotally formed so as to extend to each side of a front frame portion holding lenses and formed to be openable and closable between a position where the temple member extends in a direction intersecting the front frame portion and a position where the temple member extends along the front frame portion;
a deformable region portion formed at a distal end side of the temple member and deformable in inner and outer directions;
a bending member fixed to a bendable tongue-shaped portion formed in the temple member in the deformable region portion; and
a bendable cap member enclosing the tongue-shaped portion in the deformable region portion to form a cavity portion around the bonding member, wherein
the bending member is composed of two end portions formed at positions opposed to each other, a pair of coupling portions formed of a material having flexibility and arranged side by side in a vertical direction so as to couple the two end portions, and an elastic portion coupling the two end portions at a position sandwiched by the pair of coupling portions in curved states of the coupling portions;
the coupling portions are switched between a first attitude curved outward in a convex shape and a second attitude curved inward in a convex shape;
when the coupling portions are in the first attitude or the second attitude, the lengths of the coupling portions are longer than the length of the elastic portion in a front-back direction of the elastic portion; and
the elastic portion stretches elastically in the course of switching between one attitude of the first attitude and the second attitude of the coupling portions to the other attitude.

12. A temple according to claim 11, wherein through-holes are formed in the bending member on both sides of curvature of the coupling portion, two convex portions are formed in the deformable region portion so as to project from the tongue-shaped portion, and the bending member is fixed to the temple member by fitting the convex portions into the through-holes of the bending member.

13. A temple for a glasses frame, including a temple member pivotally formed to extend on each side of a front frame portion holding lenses and formed so as to be openable and closable between a position where the temple member extends in a direction intersecting the front frame portion and a position where the temple member extends along the front frame portion, wherein
the temple member is provided with a deformable region portion deforming in inner and outer directions at a portion of the temple member in a longitudinal direction thereof;
a bending member formed in the deformable region portion to be switchable between curved states inversed to each other;
the bending member is formed of a plate-shaped body formed of an elastic material to be curved; and a bulging portion bulging so as to project toward one face side of the plate-shaped body is formed at a portion of an intermediate portion of the plate-shaped body; and
the bending member is switched between a first attitude curved outward in a convex shape and a second attitude curved inward in a convex shape.

14. A manufacturing method of a temple including a temple member pivotally formed so as to extend on each side of a front frame portion holding lenses and provided with a deformable region portion deforming in inner and outer directions at a portion of the temple member in a longitudinal direction thereof, comprising:
a step of preparing the temple member having a recessed portion formed in the deformable region portion from one side in a pivoting direction of the temple member;
a step of preparing a bending member composed of two end portions formed at positions opposed to each other, a pair of coupling portions formed of a material having flexibility and arranged side by side in a vertical direction so as to couple the two end portions, and an elastic portion coupling the two end portions at a position sandwiched between the pair of coupling portions in curved states of the coupling portions, the bending member being formed so as to be switchable between curved states inversed to each other;
a step of fitting the bending member into the recessed portion of the temple member in such a direction that a curved direction of the coupling portions coincides with an opening portion of the recessed portion to fix the bending member to the temple member within the recessed portion; and
a step of attaching a cover member to the temple member so as to cover the recessed portion of the temple member.
